# EUROPÄISCHE PATENTANMELDUNG

(11) **EP 4 793 851 A1**
(43) Veröffentlichungstag der Anmeldung: **19.08.2026**
(21) Anmeldenummer: 25158528.7
(22) Anmeldetag: 18.02.2025
(51) Int. Cl.: G06Q 10/08, G06Q 10/083, G06Q 10/087, B07C 3/02, B07C 5/36

(54) **VORRICHTUNG UND VERFAHREN ZUM BELADEN EINES BEHÄLTERS MIT EINEM OBJEKT, EIN SORTIERZENTRUM MIT DER VORRICHTUNG SOWIE EIN ENTSPRECHENDES COMPUTERPROGRAMMPRODUKT**

(71) Anmelder: BEUMER Group GmbH & Co. KG, 59269 Beckum (DE)
(72) Erfinder: Meyer, Marlon, 33803 Steinhagen (Westfalen) (DE); Neumann, Nils, 58089 Hagen (DE)
(74) Vertreter: Angerhausen, Christoph

(57) **Zusammenfassung**

Die Erfindung betrifft ein Verfahren zum Beladen eines Behälters (20) mit einem Objekt (30), umfassend die Schritte:
- Erhalten von Informationen, insbesondere von einer Sortieranlage (120), zu mehreren, insbesondere in einem definierten Zeitintervall, zu empfangenden Objekten (30);
- Erhalten von Informationen zu einem Beladungszustand des Behälters (20);
- Basierend auf den erhaltenen Informationen, Bestimmen einer Beladung des Behälters (20) mit den zu empfangenden Objekten (30), insbesondere Bestimmen eines Zielbereichs in dem Behälter (20), einer Reihenfolge der zu empfangenen Objekte (30) und/oder einer Orientierung der zu empfangenden Objekte (30); und
- Basierend auf der bestimmten Beladung, insbesondere basierend auf einem bestimmten Zielbereich in dem Behälter (30), Beladen des Behälters (20) mit zumindest einem der zu empfangenden Objekte (30).

Die Erfindung ist weiterhin auf eine Vorrichtung zum Beladen eines Behälters (20) mit einem Objekt (30), ein Sortierzentrum (100), insbesondere zur Paketsortierung, umfassend eine erfindungsgemäße Vorrichtung (110) sowie ein Computerprogrammprodukt, insbesondere ein Steuerprogramm für eine Steuereinheit (40), gerichtet.

## Beschreibung

Die vorliegende Erfindung bezieht sich auf eine Vorrichtung und ein Verfahren zum Beladen eines Behälters mit einem Objekt, insbesondere für den Einsatz in Sortierzentren. Insbesondere betrifft die Offenbarung ein Verfahren, das basierend auf erhaltenen Informationen zu mehreren zu empfangenden Objekten eine Beladung des Behälters mit den zu empfangenden Objekten bestimmt und basierend auf der bestimmten Beladung ein Beladen des Behälters mit zumindest einem der zu empfangenden Objekte durchführt. Weiterhin ist die Erfindung auf ein Sortierzentrum sowie ein Computerprogrammprodukt gerichtet.

Das Verladen eines Objekts wie ein Paket in einen Behälter, wie z. B. einen Container, Käfig oder Anhänger, erfordert in der Regel, dass die Objekte in dem Behälter von Hand gestapelt werden. Auch wenn das Objekt über ein Förderband zum Behälter transportiert wird, muss ein Arbeiter das Objekt vom Förderband oder von der Stelle, an der das Förderband das Objekt entladen hat, nehmen und das Objekt an einer geeigneten Stelle innerhalb des wachsenden Objektstapels in dem Behälter positionieren.

Fördererbänder können das Objekt in die Nähe der Position bringen, an der das Objekt in den Objektstapel eingelegt werden soll, und im weiteren Verlauf der Arbeit kann das Förderband zu verschiedenen Positionen bewegt werden, an denen der Arbeiter das Objekt entnehmen und an einer geeigneten Stelle im Objektstapel ablegen kann.

Es gibt auch Lösungen, bei denen die Fördersysteme die Objekte ohne Hilfe von Mitarbeitern in einen Behälter legen, haben jedoch Probleme, Objekte effizient zu stapeln, insbesondere wenn die Objekte unterschiedliche Größen und Gewichte haben.

Denn diese Systeme basieren häufig auf statischen Informationen und vorab definierten Beladungsstrategien, die wenig Flexibilität bieten, wenn es um die Handhabung von Objekten unterschiedlicher Formen, Größen und Gewichte geht. Dies kann zu ineffizienter Raumnutzung innerhalb des Behälters führen und die Notwendigkeit häufiger manueller Eingriffe erhöhen, um die Beladung zu optimieren. Darüber hinaus fehlt es vielen bestehenden Systemen an der Fähigkeit, den aktuellen Beladungszustand des Behälters kontinuierlich zu überwachen und die Beladungsstrategie entsprechend anzupassen. Dies kann zu Überfüllungen oder suboptimalen Beladungsmustern führen, die die Effizienz des gesamten Beladungsprozesses beeinträchtigen.

Von Vorteil wäre daher eine Methode, mit der Objekte in einem Behälter effizient gestapelt werden können, ohne dass Arbeiter die Objekte manuell stapeln müssen, gleichzeitig aber eine effiziente Raumnutzung ermöglicht wird.

Es ist daher die Aufgabe der Erfindung, ein Verfahren und eine Vorrichtung zum Beladen eines Behälters mit einem Objekt bereitzustellen, das die Nachteile bekannter Systeme zumindest teilweise überwindet, so dass eine effiziente und optimierte Beladung erreicht werden kann.

Diese Aufgabe wird durch ein Verfahren zum Beladen eines Behälters mit einem Objekt mit den Merkmalen des Anspruchs 1, einer entsprechenden Vorrichtung nach Anspruch 17, einem Sortierzentrum gemäß Anspruch 20 sowie einem Computerprogrammprodukt nach Anspruch 21 gelöst. Die abhängigen Ansprüche betreffen jeweils vorteilhafte Ausführungsformen der Erfindung.

Demgemäß ist ein Verfahren zum Beladen eines Behälters mit einem Objekt vorgesehen, das die folgenden Schritte umfasst:
- Erhalten von Informationen, insbesondere von einer Sortieranlage, zu mehreren, insbesondere in einem definierten Zeitintervall, zu empfangenden Objekten;
- Erhalten von Informationen zu einem Beladungszustand des Behälters;
- Basierend auf den erhaltenen Informationen, Bestimmen einer Beladung des Behälters mit den zu empfangenden Objekten, insbesondere Bestimmen eines Zielbereichs in dem Behälter, einer Reihenfolge der zu empfangenden Objekte und/oder einer Orientierung der zu empfangenden Objekte; und
- Basierend auf der bestimmten Beladung, insbesondere basierend auf einem bestimmten Zielbereich der zu empfangenden Objekte, Beladen des Behälters mit zumindest einem der zu empfangenden Objekte.

Die erhaltenen Informationen können Daten über die Anzahl, Größe oder andere relevante Merkmale der Objekte umfassen. So können die zu empfangenden Objekte beispielsweise von einer Sortieranlage bereitgestellt werden, die die Objekte vor dem Beladen des Behälters sortiert. Die zu empfangenden Objekte können dabei eine vorbestimmte Größe und/oder Ausrichtung aufweisen, die im Voraus bekannt sein kann, und durch die Sortieranlage bereitgestellt werden kann. Dazu kann die Sortieranlage beispielsweise ein Bemessungs-/Wiegesystem aufweisen.

Die erhaltenen Informationen über mehrere, zu empfangende Objekte können aus verschiedenen Quellen stammen, beispielsweise auch aus Logistiknetzwerken eines Postunternehmens oder Versanddienstleisters. So können die erhaltenen Informationen eine frühzeitige Ankündigung eines Objekts enthalten, noch bevor das Objekt überhaupt an das Postunternehmen oder den Versanddienstleister übergeben wurde. Solche Vorabinformationen können beim Bestimmen der Beladen berücksichtigt werden und so eine effizientere Planung und Steuerung des Beladens ermöglichen.

Weiterhin können die Informationen über mehrere, zu empfangende Objekte Verteilzentren eines Postunternehmens oder Versanddienstleisters, insbesondere fortlaufend, erfasste und/oder ausgetauschte Daten umfassen, beispielsweise darüber, wann welche Pakete wohin weitergeleitet werden und zu welchen Zeiten bestimmte Lieferungen, etwa mittels LKWs, erwartet werden. Diese Informationen können beim Bestimmen der Beladung genutzt werden, um Abläufe beim Beladen zu optimieren und Engpässe zu vermeiden.

Darüber hinaus wäre es denkbar, dass die Informationen über mehrere, zu empfangende Objekte detaillierte Informationen über einzelne Sendungen enthalten, die in Logistiknetzwerken wie Paketzentren untereinander ausgetauscht werden. Diese Daten können beim Bestimmen der Beladung genutzt werden, um beispielsweise die Sortierung und Verladung der Objekte zu optimieren oder einen innerbetrieblichen Transport effizienter zu gestalten, insbesondere für Algorithmen von autonomen Robotern oder automatisierten Fördersystemen.

Durch die Informationen zum Beladungszustand des Behälters ist beispielsweise ein verfügbarer Platz oder bereits vorhandene Objekte im Behälter bekannt. Das Bestimmen der Beladung kann insbesondere das Bestimmen eines Zielbereichs umfassen, aber alternativ oder zusätzlich auch ein Festlegen einer Reihenfolge und/oder Orientierung der Objekte umfassen, so dass ein verfügbarer Raum optimal genutzt werden kann. Da Beladen basierend auf dieser bestimmten Beladung erfolgt, kann der Beladungsprozess optimiert werden, indem die Objekte beispielsweise in einem geeigneten Zielbereich abgelegt werden, in einer bestimmten Reihenfolge verarbeitet werden und/oder in einer bestimmten Orientierung verladen werden. Dabei kann auch vorgesehen sein, dass das Bestimmen der Beladung ein Auswählen eines Behälters umfasst, wenn beispielsweise mehr als ein Behälter zur Verfügung steht.

Ein Vorteil dieses Verfahrens ist eine mögliche Steigerung der Effizienz beim Beladen, da der Prozess durch die Berücksichtigung mehrerer zu empfangender Objekte, insbesondere hinsichtlich eines optimalen Zielbereichs, einer optimalen Reihenfolge und/oder optimalen Orientierung der Objekte, verbessert werden kann. Ein weiterer Vorteil könnte eine Reduzierung der Zeit und der Ressourcen sein, die für das Beladen benötigt werden, da der Prozess systematisch und gut organisiert ablaufen kann.

Darüber hinaus kann die Erfindung die Objekte effizient stapeln mit einem Minimum an Platz zwischen den Objekten, um die Anzahl der Objekte zu optimieren, die in dem Behälter gestapelt werden können, ohne dass Arbeiter die Objekte manuell stapeln müssen.

Daher kann die Erfindung für eine dichtere Packung der Objekte in dem Behälter sorgen, so dass mehr Objekte in den Behälter gelegt werden können und die Gefahr der Beschädigung eines Objekts beim Einlegen des Objekts in den Behälter verringert wird. Die Gewährleistung einer dichteren Packung von Objekten in einem Behälter ist vorteilhaft, weil dann mehr Objekte innerhalb eines Behälters transportiert werden können, was die Effizienz der einzelnen Transportschritte erhöht.

Umgekehrt können weniger Behälter erforderlich sein, um eine ausreichend große Anzahl von Objekten an denselben Bestimmungsort zu befördern, was die Transportkosten senken kann, da durch weniger Fahrten oder weniger Ladung weniger Kraftstoff verbraucht wird.

Alternativ oder zusätzlich kann die Erfindung vorsehen, dass die gleiche Anzahl von Objekten in einem Behälter in einer kürzeren Zeitspanne gestapelt werden kann, da durch die bestimmte Beladung ein Beladungsvorgang optimiert werden kann.

Darüber hinaus kann die Erfindung für leichte und schwere Objekte und für ein breites Spektrum an Größen von klein bis groß geeignet sein.

Zum Erhalten der Informationen, insbesondere zum Erfassen des Beladungszustands, kann eine Erfassungseinheit, die z. B. einen Bildsensor umfassen kann, vorgesehen sein. So kann beim Bestimmen der Beladung beispielsweise eine bestimmte Position in dem Behälter zum Platzieren eines Objekts bestimmt werden, indem eine Vielzahl möglicher Positionen für das Objekt in Betracht gezogen wird, die auf der Größe und/oder der Ausrichtung des Objekts und den Informationen der Erfassungseinheit über den Beladungszustand des Behälters basieren. Jede der möglichen Positionen kann unter Verwendung von Auswahlkriterien bewertet und verglichen werden, und die bestmögliche Position wird als bestimmte Position identifiziert. Die Auswahlkriterien können eine Stapelstabilität, die optimale Nutzung von Freiraum oder Ähnliches umfassen.

Dabei kann die Erfassungseinheit einen Bildsensor aufweisen oder als ein solcher ausgeführt sein. Dieser kann so angeordnet sein, dass er eine dreidimensionale Abtastung des Behälters vornimmt. Bei dem Bildsensor kann es sich um einen dreidimensionalen Volumenscanner oder eine Tiefenerkennungskamera handeln, wie z. B. eine Time-of-Flight-Kamera, eine Stereokamera, ein Lidar-Scanner oder Ähnliches. Alternativ dazu kann der Bildsensor auch eine Kamera (RGB, RGB-D, SWIR, NIR), eine Videokamera oder ein Infrarotscanner sein. Weiterhin kann die Erfassungseinheit als ein Barcode-Scanner, ein QR-Code-Scanner, eine Hyperspektralkamera, eine multispektrale Kamera, ein Drucksensor, ein Kraftsensor, ein kapazitiver Sensor, ein piezoelektrischer Sensor, ein Ultraschallsensor, ein Mikrofon, eine Spracherkennung (RFID - Radio-Frequency Identification) und/oder ein Magnetfeldsensor sein oder einen solchen Sensor aufweisen.

Die Erfassungseinheit tastet beispielsweise den Behälter ab, um zu erkennen, wo es einen freien Platz gibt, in den das Objekt geladen werden kann. Basierend auf den Informationen der Erfassungseinheit über den Behälter kann beim Bestimmen der Beladung eine bestimmte Position eines zu empfangenden Objekts in dem Behälter bestimmt werden.

Die Erfassungseinheit kann weiterhin Informationen über einen freien Platz in dem Behälter liefern. Alternativ oder zusätzlich dazu kann die Erfassungseinheit einen Beladungszustand des Behälters, umfassend bereits in dem Behälter platzierte Objekte, liefern. Die Erfassungseinheit kann so ausgelegt sein, dass sie Informationen über den Behälter liefert, indem sie mit einer in dem Behälter enthaltenen Sensorvorrichtung kommuniziert.

Die Erfassungseinheit kann Metadaten über den Behälter liefern, z. B. Abmessungen oder Positionen, die für die Aufnahme und Lagerung von Objekten in dem Behälter geeignet sind. Wenn Größe und Form der Objekte bekannt sind, kann das Beladen erfolgen, ohne dass eine optische Erfassungseinheit, wie eine Kamera, freien Raum in dem Behälter erkennt.

Der Begriff "Objekt" wird in diesem Dokument verwendet, um Gegenstände zu bezeichnen, die insbesondere zum Stapeln üblich und/oder geeignet sind. Der Begriff "Paket" kann dabei insbesondere herkömmliche Pakete, aber auch andere Gegenstände wie Taschen, Koffer, Gepäckstücke, Artikel, Umschläge und mehr bezeichnen.

Als "Behälter" wird hier jede Einheit verstanden, die üblich und/oder geeignet ist, mehrere Objekte aufzunehmen. Insbesondere werden hier als "Behälter" Rollbehälter, Gitterboxen, Container, Kisten, Käfige, Transportfahrzeuge, Lieferwagen oder Lastwagen verstanden. Der Behälter kann ebenfalls eine im Wesentlichen kastenförmige Aufnahmeeinheit mit festem Boden, drei Seitenwänden und einer offenen Vorder- und Oberseite sein, wie z. B. ein Korbwagen auf Rädern, ein Paketrollbehälter oder ähnliches. Der Behälter kann auch als Transportmedium verwendet werden, um die darin enthaltenen Objekte an einen anderen Ort zu befördern, z. B. per Lkw zu einem Paketverteilzentrum.

Der Behälter kann vorzugsweise automatisch verfahrbar sein. Dies könnte durch ein AGV (Automated Guided Vehicle), einen mobilen Roboter oder über herkömmliche Fördertechnik geschehen.

Das Verfahren kann beispielsweise mittels einer Steuereinheit durchgeführt werden oder eine Steuereinheit nutzen. Bei einer solchen Steuereinheit kann es sich um eine einzelne Steuereinheit oder um mehrere verbundene Steuereinheiten handeln. Die Steuereinheit kann insbesondere ausgebildet und eingerichtet sein, die Informationen zu erhalten und basierend auf den Informationen die Beladung zu bestimmen.

Vorzugsweise erfolgt das Erhalten von Informationen zu den zu empfangenden Objekten und/oder zu dem Beladungszustand im Wesentlichen kontinuierlich und das Bestimmen, basierend auf den im Wesentlichen kontinuierlich erhaltenen Informationen, wird dynamisch aktualisiert. Hierzu können spezifische Kommunikationsmechanismen oder Mittel zur Interaktion zwischen den Komponenten vorgesehen sein, die das kontinuierliche Erhalten der Informationen und dynamische Aktualisieren der Beladung ermöglichen.

Durch das kontinuierliche Erhalten der Informationen kann sichergestellt werden, dass die Daten stets aktuell sind, was eine präzise und effiziente Bestimmung der Beladung des Behälters ermöglicht. Die dynamische Aktualisierung basiert auf diesen kontinuierlich erfassten Informationen und erlaubt es, die Beladung, insbesondere die Reihenfolge und Orientierung der zu empfangenden Objekte, in Echtzeit anzupassen. Dies führt zu einer optimierten Beladung des Behälters, da Änderungen in den zu empfangenden Objekten oder im Beladungszustand des Behälters sofort berücksichtigt werden können.

Ein Vorteil dieser kontinuierlichen und dynamischen Vorgehensweise ist eine erhöhte Effizienz und Genauigkeit im Beladungsprozess, da Verzögerungen und Fehler durch veraltete Informationen reduziert werden können. Darüber hinaus ermöglicht diese Methode eine flexible Anpassung an unterschiedliche Szenarien und Anforderungen, was insbesondere in dynamischen Umgebungen von großem Nutzen ist. Die kontinuierliche Erfassung und dynamische Aktualisierung der Informationen können durch verschiedene Technologien realisiert werden, wie zum Beispiel durch Sensoren, die den Beladungszustand des Behälters in Echtzeit überwachen, oder durch Kommunikationssysteme, die Informationen zu den zu empfangenden Objekten in Echtzeit bereitstellen. Ein weiterer Vorteil dieser Ausführungsform ist die Möglichkeit, den gesamten Beladungsprozess zu automatisieren und zu optimieren, was zu einer Reduzierung der manuellen Eingriffe und einer Steigerung der Produktivität führt.

Vorzugsweise umfassen die Informationen zu den zu empfangenden Objekten eine Form, ein Gewicht und/oder einen Typ der zu empfangenden Objekte. Diese zusätzlichen Informationen ermöglichen eine präzisere und effizientere Planung und Durchführung des Beladungsprozesses. Die Form eines Objekts kann beispielsweise dazu verwendet werden, die optimale Anordnung der Objekte im Behälter zu bestimmen, um den verfügbaren Raum bestmöglich auszunutzen und eine stabile Beladung zu gewährleisten. Das Gewicht der Objekte kann genutzt werden, um sicherzustellen, dass der Behälter nicht überladen wird und die Last gleichmäßig verteilt ist, was zur Vermeidung von Beschädigungen und zur Aufrechterhaltung der Stabilität während des Transports beiträgt. Der Typ des Objekts kann Informationen über die Handhabungsempfindlichkeit, die Stapelbarkeit und andere spezifische Eigenschaften liefern, die bei der Beladungsplanung berücksichtigt werden können. Durch die Berücksichtigung dieser Informationen kann das Verfahren die Beladung mit den zu empfangenden Objekte so bestimmen, dass eine effiziente und sichere Beladung des Behälters erreicht wird. Dies führt zu einer Reduzierung von Ladezeiten und einer Minimierung von Beschädigungen an den Objekten während des Beladungsprozesses. Zudem ermöglicht es eine Anpassung an unterschiedliche Objektarten und -größen, was die Flexibilität und Vielseitigkeit des Verfahrens erhöht.

Gemäß einer Weiterbildung kann basierend auf dem Erhalten von Informationen zu den zu empfangenden Objekten ein Kategorisieren zumindest eines der zu empfangenden Objekte erfolgen. Dabei erfolgt das Bestimmen der Beladung des Behälters, insbesondere des Zielbereichs in dem Behälter für das zumindest eine zu empfangende Objekt, und/oder das Beladen des Behälters mit dem zumindest einen zu empfangenden Objekt basierend auf dem Kategorisieren des zumindest einen zu empfangenden Objekts. Dadurch kann das Beladen an Anforderungen des zu empfangenden Objekts angepasst werden. So kann beispielsweise anhand des Kategorisierens ein zu empfangendes Objekt beim Beladen speziell gehandhabt werden. Abhängig vom Kategorisieren kann etwa eine Geschwindigkeit oder Art, beispielsweise durch Auswählen eines geeigneten Endeffektors, des Beladens angepasst werden. Auch ein Zielbereich kann basierend auf dem Kategorisieren angepasst werden, beispielsweise durch Berücksichtigen einer Stapelfähigkeit eines Objekts.

So kann beispielsweise vorgesehen sein, dass ein als zerbrechlicher Gegenstand kategorisiertes Objekt, etwa eine Weinflasche, mit einer reduzierten Geschwindigkeit beladen wird, sowie eine spezielle Platzierung im Behälter, beispielsweise nicht auf einer Polybag, vorgesehen wird. Wird ein Objekt andererseits als ein Polybag mit Socken detektiert, kann es für eine robuste Handhabung klassifiziert werden, so dass ein Beladen mit hoher Geschwindigkeit erfolgt und eine Positionierung auch in einer Lücke zwischen anderen Objekten bestimmt werden kann.

Auch kann vorgesehen sein, dass das Kategorisieren auf einer Datenanalyse erfolgt. Wenn beispielsweise die erhaltenen Informationen Angaben erhalten, dass zu bestimmten Zeiten eine bestimmte Menge an Objekten eintrifft, die ähnliche Eigenschaften aufweisen, so kann beim Kategorisieren diese Objektmenge einheitlich kategorisiert werden. Beispielsweise kann in den erhaltenen Informationen hinterlegt sein, dass eine große Menge an Kleidung regelmäßig zu einer bestimmten Uhrzeit eintrifft und in die Behälter geladen werden muss. Diese Objektmenge kann dann beim Kategorisieren für eine robuste Handhabung eingeteilt werden, so dass das Bestimmen und Beladen entsprechend angepasst werden.

Bevorzugt erfolgt das Kategorisieren basierend auf durch die Erfassungseinheit bereitgestellten Informationen zu den zu empfangenden Objekten und/oder dem Beladungszustand des Behälters.

Vorzugsweise erfolgt basierend auf der bestimmten Beladung, insbesondere basierend auf einer bestimmten Reihenfolge der zu empfangenden Objekte, ein Auswählen von zumindest einem der zu empfangenden Objekte. Dadurch ermöglicht das Verfahren, dass die zu empfangenden Objekte nicht nur in der Reihenfolge verarbeitet werden können, in der sie eintreffen. Vielmehr kann so abhängig von einem verfügbaren Platz in dem Behälter das am besten geeignete Objekt zum Beladen ausgewählt werden. Bevorzugt erfolgt das Auswählen aus zwei bis drei zu empfangenden Objekten. Es kann aber auch vorgesehen sein, aus einer größeren Anzahl auszuwählen, insbesondere wenn ein Zwischenspeichern und/oder Rezirkulieren zumindest eines der zu empfangenden Objekte vorgesehen ist.

Weiterhin kann vorgesehen sein, dass das Verfahren ein Überprüfen der zu empfangenden Objekte und/oder des Behälter und ein Verifizieren der bestimmten Beladung anhand des Überprüfens umfasst. Dabei kann das Verifizieren insbesondere ein Vergleichen des Überprüfens mit den erhaltenen Informationen umfassen. Durch das Vorsehen spezifischer Schritte zur Überprüfung und Verifizierung der Informationen kann die Effizienz und insbesondere die Genauigkeit des Beladungsprozesses verbessert werden.

So können die zu empfangenden Objekte sowie der Behälter selbst überprüft werden, um sicherzustellen, dass die Beladung korrekt und effizient durchgeführt wird. Dabei kann insbesondere vorgesehen sein, dass das Überprüfen Informationen zu den zu erhaltenen Objekten und/oder zum Beladungszustand des Behälters liefert, die unabhängig von den erhaltenen Informationen erfasst werden. Damit stehen dem Verfahren zu den erhaltenen Objekten und/oder dem Beladungszustand Informationen aus verschiedenen Quellen zur Verfügung, womit eine Informationsgenauigkeit verbessert werden kann.

Das Verifizieren der bestimmten Beladung kann dabei durch einen Vergleich der Überprüfungsergebnisse mit den zuvor erhaltenen Informationen erfolgen. Diese Verifizierung stellt sicher, dass die geplante Beladung mit der tatsächlichen Beladung und/oder den zu empfangenden Objekten übereinstimmt, was zu einer Reduzierung von Fehlern und einer Optimierung des Beladungsprozesses führt. Insbesondere können so durch die Überprüfung und Verifizierung potenzielle Fehler frühzeitig erkannt und beim Bestimmen der Beladung berücksichtigt werden, was zu einer Reduzierung von Nacharbeiten und Verzögerungen führt. Die Möglichkeit, die Beladung anhand der Überprüfungsergebnisse zu verifizieren, bietet auch Flexibilität, da das Verfahren in der Lage ist, auf unerwartete Änderungen oder Abweichungen zu reagieren und entsprechende Anpassungen vorzunehmen.

Vorzugsweise umfasst das Verfahren eine Füllstandsprüfung des Behälters, wobei die Füllstandsprüfung ein Abgleichen zwischen dem Beladungszustand des Behälters und der bestimmten Beladung umfasst. Die Füllstandsprüfung ermöglicht somit, dass mittels des Verfahrens erkannt werden kann, wenn der Behälter voll ist. Die Füllstandsprüfung kann durch verschiedene Sensoren oder Messvorrichtungen erfolgen, die in der Lage sind, den aktuellen Füllstand des Behälters genau zu erfassen. Diese Sensoren können beispielsweise Gewichtssensoren, Volumensensoren oder optische Sensoren umfassen, die den Raum im Behälter überwachen.

Dabei kann insbesondere vorgesehen sein, dass das Verfahren ein Wechseln des Behälters basierend auf der Füllstandsprüfung vorsieht. So kann beispielsweise ein Wechseln initiiert werden, wenn die Füllstandsprüfung ergibt, dass keines der zu empfangenden Objekte im Behälter mehr untergebracht werden kann. Somit kann es vorkommen, dass auch ein nicht vollständig gefüllter Behälter durch das Verfahren als voll markiert wird, wenn die verbleibenden, zu empfangenden Pakete, einen maximal Füllstand des Behälters überschreiten würden. Durch diese dynamische Füllstandsprüfung kann ein optimaler Beladevorgang sichergestellt werden und ein kontinuierliches Durchführen des Verfahrens kann gewährleistet bleiben.

Auch kann vorgesehen sein, dass das Verfahren bei Überschreiten eines bestimmten Füllstands reagiert und automatisch den Wechsel des Behälters initiiert, ohne dass ein menschliches Eingreifen erforderlich ist. Dies führt zu einer Reduzierung des Arbeitsaufwands und einer Erhöhung der Prozesssicherheit.

Vorzugsweise umfasst das Verfahren ein Zwischenspeichern eines zu empfangenden Objekts, wobei das Zwischenspeichern basierend auf der bestimmten Beladung erfolgt. Das Zwischenspeichern ermöglicht es, die Objekte temporär zu lagern, bevor sie in den Behälter geladen werden, was besonders vorteilhaft ist, wenn die bestimmte Beladung eine bestimmte Reihenfolge oder Orientierung der Objekte vorsieht. Ein Vorteil dieses Verfahrens ist die erhöhte Effizienz und Genauigkeit beim Beladen des Behälters, da das Zwischenspeichern eine reibungslose und koordinierte Übergabe der Objekte ermöglicht. Ein weiterer Vorteil besteht darin, dass durch das Zwischenspeichern Engpässe und Verzögerungen vermieden werden können, die sonst durch eine direkte Beladung ohne Zwischenspeicherung entstehen könnten. Darüber hinaus kann das Zwischenspeichern die Flexibilität des Verfahrens erhöhen, da es ermöglicht, auf unvorhergesehene Änderungen oder Störungen im Beladungsprozess zu reagieren. Beispielsweise kann das System bei einer Unterbrechung des Beladungsprozesses die zwischengespeicherten Objekte sicher aufbewahren und den Beladungsprozess später fortsetzen, ohne dass die Objekte beschädigt oder verloren gehen.

Das Zwischenspeichern kann insbesondere vorteilhaft sein, wenn die zu empfangenden Objekte nicht vorsortiert, sondern in einer zufälligen Reihenfolge ankommen, so dass es schwieriger ist, die Objekte optimal zu beladen. In diesem Fall kann ein Zwischenspeichern erforderlich sein, um die Objekte vorübergehend in einem Zwischenspeicher zu lagern, bevor sie in den Behälter geladen werden. Dies kann dazu führen, dass die Objekte dichter gestapelt werden können, da die Reihenfolge, in der die Objekte in dem Behälter gestapelt werden, besser kontrolliert werden kann. Zusätzlich oder alternativ kann ein Zwischenspeicher dafür sorgen, dass Objekte empfangen und vorübergehend im Zwischenspeicher gelagert werden können, um den Betrieb fortzusetzen, während ein voller Behälter ausgetauscht wird.

Sollte es zu Engpässen beim Zwischenspeichern kommen und/oder eine Beladung des Behälters nicht möglich oder gewünscht sein, kann auch vorgesehen sein, zu empfangende Objekte auf einem vorgelagerten Sorter, beispielsweise einer Sortieranlage, zu rezirkulieren.

Vorzugsweise umfasst das Verfahren ein Verarbeiten historischer Daten, insbesondere der erhaltenen Informationen und/oder von Ankunftszeitpunkten oder Paketvolumen, wobei das Bestimmen der Beladung unter Berücksichtigung der historischen Daten erfolgt, insbesondere indem das Bestimmen der Beladung eine lokale Vorhersage, insbesondere eines Sortieraufkommens, umfasst. Dadurch wird ermöglicht, dass wiederholt, insbesondere regelmäßig, auftretende Objektmengen und/oder -arten effizient und entsprechend ihrer Anforderungen beladen werden können. Insbesondere mittels einer lokalen Vorhersage kann somit ein prädiktives Beladen erfolgen.

Weiterhin kann vorgesehen sein, dass das Bestimmen der Beladung in zumindest einem lokalen System, beispielsweise einer Packstation, erfolgt, umfassend ein Aggregieren der bestimmten Beladung, insbesondere einer lokalen Vorhersage, des lokalen Systems durch ein zentrales System und ein Erstellen einer übergeordneten Nachfrageprognose durch das zentrale System, insbesondere umfassend ein Berücksichtigen komplexer Muster wie saisonale Schwankungen, Spitzenzeiten und/oder regionale Unterschiede, beispielsweise durch Nutzen maschinellen Lernens. Dadurch kann ein Beladen verbessert werden, da beispielsweise eine Verteilung von Objekten an lokale Systeme je nach Auslastung angepasst werden kann. Auch könnte so ein Roboter zum Beladen optimal konfiguriert werden, beispielsweise durch Auswahl eines geeigneten Endeffektors und/oder eine Anpassung der Beladungsgeschwindigkeit.

Gemäß einer Weiterbildung kann das Erstellen der übergeordneten Nachfrageprognose eine Analyse langfristiger Muster und/oder komplexer räumlicher und zeitlicher Beziehungen umfassen, insbesondere durch das Nutzen maschinellen Lernens mit Long short-term memory (LSTM) und/oder einem Convolutional Neural Network (CNN). Dadurch kann eine Effizienz der Beladung weiter optimiert werden.

Vorzugsweise erfolgt das Beladen mittels einer Packstation, die insbesondere einen Roboter umfasst. Die Packstation weist zumindest einen Endeffektor auf, der speziell für das Beladen eines Objekts konzipiert ist. Der Einsatz einer Packstation bietet eine erhöhte Präzision und Effizienz. Denn eine Packstation ist in der Lage, Objekte mit hoher Genauigkeit zu handhaben, was zu einer optimierten Nutzung des verfügbaren Raums im Behälter führt. Dies ist besonders wichtig, wenn es darum geht, eine bestimmte Reihenfolge und/oder Orientierung der zu empfangenden Objekte zu bestimmen und umzusetzen. Auch ist eine Packstation meist schneller ist als ein Mensch, womit sie den Systemdurchsatz erhöht, wodurch ein Logistikzentrum kostengünstiger arbeiten kann.

Ein weiterer Vorteil ist die Flexibilität, die durch den Einsatz eines Endeffektors erreicht wird. Der Begriff "Endeffektor" bezieht sich auf ein Werkzeug oder eine Vorrichtung der Packstation, insbesondere am Ende eines Roboterarms, das direkt mit dem Objekt interagiert. In diesem Kontext können Endeffektoren verschiedene Formen annehmen, wie Greifer, Saugnäpfe oder andere spezialisierte Werkzeuge, die für unterschiedliche Objekttypen und -formen geeignet sind. Der Endeffektor kann beispielsweise als ein Lastaufnahmemittel wie Quergut-Elemente oder als ein Sauger sowie als ein mechanisches Greifelement ausgebildet sein.

Der Endeffektor kann so gestaltet werden, dass er eine Vielzahl von Objekten unterschiedlicher Form und Größe aufnehmen kann, was die Vielseitigkeit der Packstation erhöht. Darüber hinaus ermöglicht die Automatisierung des Beladungsprozesses durch die Packstation eine Reduzierung der Arbeitskosten und eine Erhöhung der Durchsatzrate, da die Packstation kontinuierlich und ohne Ermüdung arbeiten kann. Die Integration eines Roboters in die Packstation ermöglicht auch eine bessere Anpassung an variierende Beladungsanforderungen, da der Roboter in der Lage ist, sich dynamisch an unterschiedliche Beladungsszenarien anzupassen. Dies führt zu einer verbesserten Effizienz und Effektivität des gesamten Beladungsprozesses.

Dabei kann auch vorgesehen sein, dass die Packstation mehr als einen Endeffektor zum Beladen eines Objekts aufweist. Das Verfahrens kann dann ein Auswählen eines Endeffektors umfassen, wobei das Auswählen basierend auf den erhaltenen Informationen zu den zu empfangenden Objekten, den erhaltenen Informationen zu dem Beladungszustand des Behälters und/oder auf der bestimmten Beladung erfolgt. Insbesondere kann das Auswählen auch basierend auf dem Kategorisieren der zu emfangenden Objekte erfolgen.

Durch die Auswahl eines geeigneten Endeffektors kann die Effizienz und Genauigkeit des Beladungsprozesses erheblich beeinflusst werden. Durch die Berücksichtigung der erhaltenen Informationen zu den zu empfangenden Objekten kann das System beispielsweise den optimalen Endeffektor auswählen, der am besten für die Handhabung des spezifischen Objekts geeignet ist. Dies kann beispielsweise bedeuten, dass ein Greifer für feste, kantige Objekte ausgewählt wird, während ein Saugnapf für glatte, flache Objekte bevorzugt wird. Die erhaltenen Informationen zu dem Beladungszustand des Behälters ermöglichen es dem System, den Endeffektor so auszuwählen, dass das zu beladende Objekt korrekt ausgerichtet werden kann. Dies trägt dazu bei, den verfügbaren Raum im Behälter effizient zu nutzen und eine stabile und sichere Beladung zu gewährleisten. Die bestimmte Beladung, die insbesondere die Reihenfolge und/oder Orientierung der zu empfangenden Objekte umfasst, kann ebenfalls für die Auswahl eines geeigneten Endeffektors genutzt werden. Können beispielsweise mehrere aufeinanderfolgende Objekte an einer Stelle platziert werden, kann ein Förderband genutzt werden, um mehrere Objekte auf einmal zu transportieren. Soll hingegen ein einzelnes Objekt, möglicherweise in einer bestimmten Orientierung, in einen Behälter geladen werden, ist beispielsweise ein Greifer oder ein Sauger besser geeignet.

Ein Vorteil dieser Ausführungsform liegt somit in einer erhöhten Flexibilität und Anpassungsfähigkeit des Verfahrens, da es in der Lage ist, verschiedene Objekttypen und -formen effizient zu handhaben und den Beladungsprozess entsprechend den spezifischen Anforderungen jeder Beladungssituation zu optimieren. Ein weiterer Vorteil ist die Verbesserung der Gesamtproduktivität und Genauigkeit des Beladungsprozesses, da die Auswahl des geeigneten Endeffektors und die Berücksichtigung der relevanten Informationen zu einer schnelleren und präziseren Beladung führen kann.

Vorzugsweise umfasst zumindest ein Endeffektor eine Vielzahl verfahrbarer Einheiten. Das Beladen des Behälters umfasst dabei ein Positionieren zumindest einer der verfahrbaren Einheiten, ein Befördern des empfangenen Objekts mittels der zumindest einen verfahrbaren Einheit an eine Entladeposition und ein Entladen des empfangenen Objekts in den Behälter. Durch die Möglichkeit, die verfahrbaren Einheiten individuell zu steuern, kann das Verfahren Objekte in unterschiedlichen Größen und Formen effizient handhaben und platzieren.

So kann vorgesehen sein, dass die Packstation ein Objekt empfängt, das Objekt auf zumindest einer der verfahrbaren Einheiten ablegt und dann die zumindest eine verfahrbare Einheit so positioniert, dass die zumindest eine verfahrbare Einheit das Paket zu einer Entladeposition weiterleiten und von der Entladeposition aus das Objekt an einer ausgewählten Position in dem Behälter ablegen kann. Die verfahrbaren Einheiten können dabei auf einer Plattform angebracht werden, um sie in mehr als einer Richtung bewegen zu können.

Die Vielzahl verfahrbarer Einheiten kann parallel und benachbart zueinander angeordnet sein. Jede verfahrbare Einheit kann einzeln angetrieben werden. Jede verfahrbare Einheit kann eine individuelle Verfahrfunktion haben. Alternativ oder zusätzlich können zwei oder mehr verfahrbare Einheiten gemeinsam verfahren werden, z. B. durch Einrasten einer oder mehrerer mechanischer Kupplungen, um ein gemeinsames Verfahren von zwei oder mehr verfahrbaren Einheiten zu ermöglichen. Eine Vielzahl der verfahrbaren Einheiten kann in die Entladeposition bewegt und ausgefahren werden, von wo aus das Objekt an der bestimmten Position in den Behälter eingeführt werden kann. Nach dem Einlegen des Objekts werden die ausgefahrenen Einheiten aus dem Behälter herausgezogen und können für ein weiteres Objekt verwendet werden.

Die verfahrbaren Einheiten können einzeln aus- und eingefahren werden, oder zwei oder mehr verfahrbare Einheiten können gemeinsam bewegt werden, um Objekte zu tragen und zu transportieren, die zu groß sind, um von einer verfahrbaren Einheit allein ausreichend getragen zu werden. Die Packstation kann in zwei verschiedenen Modi verwendet werden. In der ersten Betriebsart kann nur eine verfahrbare Einheit ausgefahren werden, um ein Objekt in den Behälter zu laden. In der zweiten Betriebsart können zwei oder mehr verfahrbare Einheiten gemeinsam ausgefahren werden, um ein Objekt in die Entladeposition zu befördern. Indem nur die erforderliche Anzahl von verfahrbaren Einheiten verwendet wird, um das Objekt zur Entladeposition zu befördern, kann das Beladen des Objekts präzise erfolgen, indem die verfahrbaren Einheiten in den Behälter in eine Lücke zwischen oder neben bereits in dem Behälter gestapelten Objekten geführt werden, ohne mit den bereits gestapelten Objekten zu kollidieren.

Wenn das Objekt in den Behälter eingelegt wird, wird es auf eine oder mehrere verfahrbare Einheit(en) gelegt. Wenn zwei oder mehr verfahrbare Einheiten verwendet werden, werden die verfahrbaren Einheiten so positioniert, dass sie sich gemeinsam in den Behälter bewegen oder ausfahren und das Objekt in die Entladeposition bringen können. Bei der Entladeposition kann es sich um eine Position handeln, die sich in der Nähe und oberhalb der ausgewählten Position in dem Behälter befindet, an der das Objekt entladen werden soll. Das Objekt wird von den verfahrbaren Einheiten gestützt, wenn das Objekt zur Entladeposition befördert wird, bis das Paket entladen ist.

Die verfahrbaren Einheiten umfassen Mittel, z. B. ein Förderband, eine Führung oder ähnliches, die das Objekt zum vorderen Ende der verfahrbaren Einheiten bewegen können. Das vordere Ende der verfahrbaren Einheiten ist das Ende, das in Richtung des Behälters oder in diesen hinein ausgefahren wird, um ein Objekt an einer ausgewählten Position in dem Behälter abzulegen.

Wenn die verfahrbaren Einheiten das Objekt in den Behälter oberhalb der gewählten Position in dem Behälter gebracht haben, ziehen sich die verfahrbaren Einheiten zurück, und im Wesentlichen gleichzeitig bewegen Förderbänder oder Führungen auf den verfahrbaren Einheiten das Objekt weiter nach vorne und von der verfahrbaren Einheit weg. Das Objekt kann auch stillstehen, während die verfahrbaren Einheiten unter dem Objekt zurückgezogen werden. Dabei sorgt das Förderband oder die Führung dafür, dass das Objekt die verfahrbare Einheit verlässt und in die bestimmte Position in dem Behälter fällt.

Die Packstation kann mehr als ein Objekt auf einmal aufnehmen und dann jedes Objekt einzeln in dem Behälter platzieren.

Außerdem kann eine Steuereinheit die Bewegung der Packstation sowie die Bewegung, das Ausfahren und Einfahren der verfahrbaren Einheiten und die Bewegung des Förderbands oder der Führung auf den verfahrbaren Einheiten steuern. Dadurch kann die Steuereinheit die Platzierung der verfahrbaren Einheiten in einer Entladeposition und das Entladen des Objekts an der bestimmten Position steuern.

Die Packstation umfasst Antriebsmittel, um die Vielzahl verfahrbarer Einheiten in Quer- und/oder Vertikalrichtung zu bewegen. Die Steuereinheit steuert die Antriebsmittel. Dabei kann die Steuereinheit die Antriebsmittel veranlassen, eine oder mehrere der verfahrbaren Einheiten so zu positionieren, dass sie das Objekt zu einer Entladeposition weiterleiten können, sowie die verfahrbaren Einheiten in eine Empfangsposition zur Aufnahme von Objekten zu bewegen.

Die Erfindung ist insbesondere, aber nicht ausschließlich, dadurch vorteilhaft, dass es möglich ist, ein Objekt in eine Lücke des Objektstapels einzulegen und ein sanftes Absetzen oder Ablegen des Objekts beim Zurückziehen der zumindest einen verfahrbaren Einheit zu erreichen. Könnten die verfahrbaren Einheiten nicht einzeln ausgefahren werden, oder könnten einige der verfahrbaren Einheiten nicht gemeinsam in den Behälter ausgefahren werden, während andere außerhalb des Behälters bleiben, dann müsste das Einlegen des Objekts von einer höheren Ebene aus erfolgen, wo die verfahrbaren Einheiten nicht mit anderen Objekten zusammenstoßen. In diesem Fall wäre der Fall des Objekts länger und die Platzierung des Objekts weniger präzise. Dadurch würde sich die Anzahl der Objekte, die in dem Behälter gestapelt werden können, verringern, und das Risiko, einen Inhalt des Objekts, das Objekt selbst oder bereits abgelegte Objekte während des Beladens zu beschädigen, würde steigen. Durch die Erfindung können die Objekte von der Seite des Behälters und nicht nur von oben eingelegt werden.

Gemäß einer Ausführungsform ist die Vielzahl verfahrbarer Einheiten auf einer beweglichen Plattform angeordnet.

Vorzugsweise sind die einziehbaren Einheiten auf einer beweglichen Plattform angeordnet, auf der die verfahrbaren Einheiten parallel und nebeneinander angeordnet sind. Die bewegliche Plattform wird in eine erste Position zur Aufnahme eines Objekts bewegt, z. B. mit den verfahrbaren Einheiten in der eingefahrenen Position, und die bewegliche Plattform wird dann in eine zweite Position bewegt, von der aus die verfahrbaren Einheiten das Objekt in den Behälter laden können.

Gemäß einer Ausführungsform umfasst das Verfahren ferner den Schritt des Bewegens der beweglichen Plattform in einer Querrichtung und/oder vertikalen Richtung, um die Position der verfahrbaren Einheiten so einzustellen, dass die ausgefahrene(n) verfahrbare(n) Einheit(en) in den Raum des Behälters oberhalb der bestimmten Position passen, wo das Objekt entladen werden soll.

Die bewegliche Plattform kann sich sowohl in Querrichtung als auch in vertikaler Richtung bewegen, um so positioniert zu werden, dass die verfahrbaren Einheiten in den Behälter hineinfahren können, um das Objekt genau in der optimalen Entladeposition abzulegen.

Die Verfahrbarkeit der Einheiten hat einige vorteilhafte, funktionelle Eigenschaften. Sie ermöglicht es, dass nur die verfahrbare(n) Einheit(en), die das zu verladende Objekt transportieren, in den Behälter eingeführt werden, womit eine Kollision mit anderen Objekten in dem Behälter vermieden oder aber zumindest unwahrscheinlicher wird.

Das Absetzen des Objekts kann durch einen Einzieheffekt erreicht werden, indem die verfahrbaren Einheit(en) eingezogen werden, wenn sich das Objekt in der gewünschten Position befindet, was zur Folge hat, dass das Objekt stehen bleibt und langsam in der bestimmten Position abgeworfen oder abgelegt wird.

Es ist denkbar, dass die verfahrbare(n) Einheit(en) auf andere Weise gesteuert werden kann (können), um zu erreichen, dass das Objekt in einer günstigeren Ausrichtung gestapelt wird als in der vorbestimmten Ausrichtung, in der das Objekt empfangen wurde, z. B. durch Kippen des Objekts um eine im Wesentlichen horizontale Achse. Dies kann den Vorteil haben, dass das Objekt besser in den verfügbaren Raum zwischen bereits gestapelten Objekten in dem Behälter passt.

Gemäß einer Ausführungsform umfasst das Entladen des Objekts von der Entladeposition zu der bestimmten Position in dem Behälter das Kippen des Objekts von einer ersten Ausrichtung an der Entladeposition zu einer zweiten Ausrichtung an der bestimmten Position. Die zweite Ausrichtung kann im Wesentlichen im rechten Winkel zur ersten Ausrichtung erfolgen, so dass das Objekt in eine stehende Position gestapelt wird. Das Kippen des Objekts kann durch Ausfahren oder Einziehen einer oder mehrerer ausgefahrener verfahrbarer Einheiten erreicht werden, während eine bewegliche Plattform in vertikaler Richtung, z. B. nach oben, bewegt wird, um das Objekt während des Kippens abzustützen.

Gemäß einer Ausführungsform umfasst das Bestimmen der bestimmten Position in dem Behälter ferner das Bestimmen einer bestimmten Ausrichtung, in der das Objekt in dem Behälter zu platzieren ist. Die bestimmte Ausrichtung kann auf der Grundlage der Größe und/oder der Ausrichtung des Objekts und der Informationen der Erfassungseinrichtung über den Behälter bestimmt werden. Der Schritt des Beförderns des Objekts in Längsrichtung zur Entladeposition kann ferner in einem dritten Modus eine vertikale Bewegung während des Ausfahrens einer, zweier oder mehrerer verfahrbarer Einheiten umfassen, beispielsweise durch die Bewegung einer beweglichen Plattform. Durch die vertikale Bewegung während des Ausfahrens einer, zweier oder mehrerer verfahrbarer Einheiten kann die Packstation dafür sorgen, dass das Objekt aus einer ursprünglichen Ausrichtung in die bestimmte Ausrichtung bewegt wird, die sich von der ursprünglichen Ausrichtung unterscheidet.

Die Objekte können sehr dicht aneinander gepackt werden, da die horizontale Bewegung während des Ablegens eines Objekts möglich ist und dadurch keine Lücken zwischen den gestapelten Objekten entstehen. Dies ist auch durch die Verfahrbarkeit der Einheiten möglich, da die Objekte bis an den Rand des benachbarten Objekts befördert werden können. Wenn ein Objekt in einen Behälter eingelegt wird, können die verfahrbaren Einheiten so gesteuert werden, dass Lücken entweder durch Befördern des Objekts oder durch eine horizontale Bewegung des Objekts minimiert werden. Die horizontale Bewegung kann durch die bewegliche Plattform, durch das Verfahren der Einheiten oder durch eine Kombination davon erfolgen.

Eine Erfassungseinheit kann auch in der Lage sein, ein auf den verfahrbaren Einheiten abgelegtes Objekt zu erkennen, um Größe und Ausrichtung des Objekts zu bestimmen. So kann beim Bestimmen der Beladung ermittelt werden, welche der verfahrbaren Einheiten in den Behälter ausgefahren werden soll. Ferner kann die Information über die Größe und Ausrichtung des Pakets beim Bestimmen verwendet werden, um die bestimmte Position zum Ablegen des Objekts zu ermitteln.

Gemäß einer Ausführungsform wird das Objekt von einer oder mehreren verfahrbaren Einheiten zu der Entladeposition befördert, die sich im Wesentlichen oberhalb der bestimmten Position in dem Behälter befindet.

Die Entladeposition kann senkrecht über der bestimmten Position liegen, zumindest um eine vorgegebene Höhe. Die Entladeposition ist eine Höhe über der bestimmten Position, die ungefähr der Höhe der mehreren verfahrbaren Einheiten entspricht, so dass zumindest während des Entladens ein unterster Teil der mehreren verfahrbaren Einheiten an oder im Wesentlichen bündig mit der bestimmten Position positioniert ist, ohne bereits abgelegte Objekte zu berühren. Es kann von Vorteil sein, dass Objekte in dem Behälter von einer Entladeposition oberhalb der bereits in dem Behälter platzierten Objekte gestapelt werden können, da dies das Risiko einer Beschädigung der Objekte während des Entladens oder Stapelns reduzieren kann.

Es kann vorgesehen sein, dass die verfahrbaren Einheiten so gestaltet werden können, dass sie ein niedriges Profil haben und in der Lage sind, mindestens das Gewicht des Objekts zu tragen, so dass die Entladeposition zwischen 0,3 und 30 Zentimetern über der bestimmten Position liegen kann, beispielsweise zwischen 5 und 10 Zentimetern darüber.

Gemäß einer Ausführungsform wird das Objekt an der bestimmten Position in dem Behälter entladen, indem die ausgefahrene(n) verfahrbare(n) Einheit(en) eingezogen wird (werden).

Gemäß einer Ausführungsform fahren die eine oder zwei oder mehr verfahrbaren Einheiten in Richtung der bestimmten Position aus, um das Objekt zur Entladeposition zu befördern, während die übrigen verfahrbaren Einheiten nicht in Richtung der bestimmten Position ausfahren.

Gemäß einer Ausführungsform sind eine oder mehrere der verfahrbaren Einheiten einziehbare Fördereinheiten, die jeweils ein Förderband zum Entladen des Objekts umfassen, das sich auf der/den verfahrbaren Einheit(en) befindet.

Gemäß einer Ausführungsform umfasst eine oder mehrere der verfahrbaren Einheit(en) jeweils eine Führung zum Entladen des auf der/den verfahrbaren Einheit(en) befindlichen Objekts.

Gemäß einer Ausführungsform erfolgt das Entladen, wenn sich das Objekt im Wesentlichen oberhalb der bestimmten Position befindet, indem die verfahrbare(n) Einheit(en) eingezogen wird (werden), während sich die Fördereinheit oder die Führung vorwärts bewegt, so dass das Objekt an der Entladeposition stationär bleibt, bis das Objekt im Wesentlichen senkrecht zur ausgewählten Position abgesetzt wird, wenn die verfahrbare(n) Einheit(en) eingezogen wird (werden).

Gemäß einer Ausführungsform umfasst die verfahrbare(n) Einheit(en) einen oder mehrere Endeffektoren, die konfiguriert sind, das Objekt allmählich von der Entladeposition in die bestimmte Position abzusenken, so dass das Objekt an der bestimmten Position abgelegt wird.

Der zumindest eine Endeffektor kann an einem vorderen Ende der verfahrbaren Einheiten angebracht werden, um das Objekt in die bestimmte Position abzusenken. Der Endeffektor kann eine Platte sein, auf der sich das Objekt von der verfahrbaren Einheit bewegen kann, und dann wird die Platte in die bestimmte Position abgesenkt, in der das Objekt die Platte verlässt, z. B. durch Kippen der Platte, so dass die Objekte von der Platte und in die bestimmte Position gleiten. Alternativ dazu kann der Endeffektor einen oder mehrere Greifer umfassen, die so konfiguriert sind, dass sie eine Haltekraft ausüben, wenn sie das Objekt kontaktieren, so dass das Gewicht des Objekts entweder teilweise oder vollständig gestützt wird, wenn das Objekt nicht von den verfahrbaren Einheiten während des Entladens gestützt wird.

In einer weiteren Ausführungsform, bei der die verfahrbaren Einheiten jeweils ein Förderband zum Entladen des auf der/den verfahrbaren Einheit(en) befindlichen Objekts umfassen, kann das Förderband am vorderen Ende der verfahrbaren Einheiten mit einem verjüngten Abschnitt ausgebildet sein. Ein sich verjüngender Abschnitt kann beispielsweise dadurch gebildet werden, dass eine zusätzliche Rolle mit einem kleinen Durchmesser, z. B. zwischen 1 und 5 Zentimetern, vor zwei Hauptrollen angeordnet wird, die zum Spannen und Vorwärtsbewegen des Förderbandes dienen. Ein sich verjüngender Abschnitt des Förderbands am vorderen Ende der verfahrbaren Einheiten kann dafür sorgen, dass das Objekt allmählich durch einen Fördervorgang von der Entladeposition bis zur bestimmten Position abgesenkt wird, indem das Förderband beim Zurückfahren der Einheiten eine Vorwärtsbewegung ausführt.

Ein weiterer Aspekt der Erfindung betrifft eine Vorrichtung zum Beladen eines Behälters mit einem Objekt, die insbesondere zum Durchführen eines erfindungsgemäßen Verfahrens geeignet ist. Die Vorrichtung umfasst dabei eine Kommunikationseinheit, die ausgebildet und eingerichtet ist, Informationen zu mehreren, insbesondere in einem definierten Zeitintervall, von der Vorrichtung zu empfangenen Objekten sowie Informationen zu einem Beladungszustand des Behälters zu erhalten. Weiterhin weist die Vorrichtung eine Steuereinheit auf, die mit der Kommunikationseinheit signalverbunden ist und ausgebildet und eingerichtet ist, basierend auf den erhaltenen Informationen eine Beladung des Behälters mit den zu empfangenden Objekten, insbesondere einen Zielbereich in dem Behälter, eine Reihenfolge der zu empfangenden Objekte und/oder eine Orientierung der zu empfangenden Objekte, zu bestimmen. Die Vorrichtung umfasst zudem eine Packstation, aufweisend zumindest einen Endeffektor zum Beladen eines Objekts. Dabei ist die Steuereinheit ausgebildet und eingerichtet, basierend auf der bestimmten Beladung den Endeffektor zum Beladen des Behälters mit dem empfangenen Objekt anzusteuern.

Damit ermöglicht die Erfindung, basierend auf der bestimmten Beladung ein zu empfangendes Objekt zu beladen, so dass ein verfügbarer Raum im Behälter möglichst effizient genutzt wird. Insbesondere können die zu empfangenden Objekte so auch in einer anderen Reihenfolge verarbeitet werden als sie empfangen werden. Weiterhin können sie in einer anderen Orientierung beladen werden als sie empfangen werden.

Ein Vorteil dieser Vorrichtung liegt somit in der erhöhten Effizienz und Genauigkeit des Beladungsprozesses, da die Steuereinheit und der Endeffektor zusammenarbeiten, um die Objekte, insbesondere in einer optimalen Reihenfolge und/oder Ausrichtung, basierend auf der bestimmten Beladung in den Behälter zu laden. Ein weiterer Vorteil ist die Flexibilität der Vorrichtung, die es ermöglicht, unterschiedliche Arten und Größen von Objekten zu handhaben und in den Behälter zu laden, was die Vielseitigkeit und Anwendbarkeit der Vorrichtung in verschiedenen industriellen Kontexten erhöht.

Die Kommunikationseinheit kann dabei sicherstellen, dass alle relevanten Daten über die zu empfangenden Objekte und den aktuellen Zustand des Behälters gesammelt und weitergeleitet werden. Die Steuereinheit ermöglicht eine Optimierung des Beladungsprozesses, indem sie beispielsweise die effizienteste Reihenfolge und/oder Ausrichtung der Objekte bestimmt, um den verfügbaren Raum im Behälter optimal zu nutzen und die Stabilität der Beladung zu gewährleisten. Die Packstation mit zumindest einem Endeffektor ermöglicht wiederum eine flexible und effiziente Handhabung der Objekte, da die Endeffektoren spezifische Aufgaben übernehmen können, was zu einer höheren Geschwindigkeit und Präzision beim Beladen führt, insbesondere im Vergleich zu einer manuellen Beladung.

Dabei kann auch vorgesehen sein, dass der zumindest eine Endeffektor eine Vielzahl verfahrbarer Einheiten umfasst, wobei jede verfahrbare Einheit in einer Längsrichtung ausfahrbar oder einziehbar ist. Die Steuereinheit kann dabei ausgebildet und eingerichtet sein, die verfahrbaren Einheiten zu steuern, um ein zu empfangendes Objekt basierend auf der bestimmten Beladung mit zumindest einer der verfahrbaren Einheiten zu beladen. Hierfür können die verfahrbaren Einheiten einzeln ausfahrbar sind sowie zwei oder mehr benachbarte Einheiten können gemeinsam ausfahrbar sind.

Bevorzugt kann vorgesehen sein, dass die Steuereinheit ausgebildet und eingerichtet ist, zumindest eine der verfahrbaren Einheiten so zu steuern, dass sie zum Beladen des Behälters die folgenden Schritte ausführt:
- Positionieren einer oder mehrerer der verfahrbaren Einheiten, um das Objekt zu einer Entladeposition befördern zu können;
- Befördern des Objekts in Längsrichtung zur Entladeposition, wobei abhängig von einer Größe und/oder Orientierung des Objekts eine oder mehrere der verfahrbaren Einheiten ausgefahren werden; und
- Entladen des Objekts an der Entladeposition in den Behälter.

Vorzugsweise weist die Packstation mehr als einen Endeffektor auf, insbesondere zumindest ein Lastaufnahmemittel und/oder zumindest ein Greifelement. Die Steuereinheit ist dabei ausgebildet und eingerichtet, basierend auf der bestimmten Beladung einen Endeffektor zum Beladen auszuwählen und anzusteuern. Durch die Auswahl und Ansteuerung eines oder mehrerer geeigneter Endeffektoren wird eine effiziente und präzise Beladung des Behälters ermöglicht. Das Auswählen kann insbesondere basierend auf einer Kategorie eines zu empfangenden Objekts basieren. Alternativ oder zusätzlich kann das Auswählen des Endeffektors basierend auf einer übergeordneten Nachfrageprognose des zentralen Systems erfolgen.

Ein Vorteil dieser Ausführungsform liegt insbesondere in der erhöhten Flexibilität und Effizienz des Beladungsprozesses, da die Steuereinheit in der Lage ist, verschiedene Endeffektoren je nach den spezifischen Anforderungen der zu empfangenden Objekte und des Beladungszustands des Behälters auszuwählen. Dies ermöglicht eine Anpassung an unterschiedliche Objektgrößen, -formen und -gewichte sowie an verschiedene Beladungsszenarien, was zu einer optimierten Raumausnutzung und einer Reduzierung von Beschädigungen der Objekte führt.

Ein weiterer Vorteil besteht in der Möglichkeit, mehrere Endeffektoren gleichzeitig oder in schneller Abfolge zu verwenden, was die Geschwindigkeit des Beladungsprozesses erhöht, und die Gesamtproduktivität der Vorrichtung verbessert. So kann beispielsweise vorgesehen sein, mehrere Objekte parallel zu beladen, auch in unterschiedliche Behälter.

Die Verwendung von spezifischen Endeffektoren für das Beladen der Objekte trägt zudem zur Schonung der Objekte bei, indem sie eine präzise Handhabung und Platzierung der Objekte im Behälter ermöglicht. Dies ist besonders vorteilhaft in Anwendungen, bei denen empfindliche oder zerbrechliche Objekte gehandhabt werden müssen.

Ein Lastaufnahmemittel kann dabei ein Förderelement wie ein Quergurt sein. Ein Greifelement kann als Sauger sowie mechanischer Greifer ausgebildet sein.

Vorzugsweise weist die Vorrichtung einen Zwischenspeicher auf, insbesondere eine Pufferstelle, ein Zwischenlager und/oder ein Fördersystem. Die Steuereinheit ist dabei ausgebildet und eingerichtet ist, zumindest eines der zu empfangenden Objekte in dem Zwischenspeicher zwischenzulagern. Durch das temporäre Lagern zumindest eines Objekts in dem Zwischenspeicher ermöglicht es die Erfindung, eine Effizienz und Flexibilität beim Beladen des Behälters mit Objekten zu erhöhen.

Der Zwischenspeicher dient dabei als temporärer Aufbewahrungsort für Objekte, die auf ihre endgültige Platzierung im Behälter warten, was eine optimierte Steuerung des Beladungsprozesses ermöglicht. Diese Funktionalität ist besonders vorteilhaft in Szenarien, in denen die Reihenfolge oder die Orientierung der Objekte im Behälter von Bedeutung ist, da sie eine präzise Kontrolle über den Beladungsprozess bietet. Der Zwischenspeicher kann auch als Puffer dienen, um Verzögerungen oder Störungen im Beladungsprozess auszugleichen, indem er eine kontinuierliche Versorgung des Behälters mit Objekten sicherstellt, selbst wenn die Zufuhr der Objekte unregelmäßig erfolgt.

Ein weiterer Vorteil dieser Ausführungsform ist die Möglichkeit, die Beladung des Behälters dynamisch anzupassen, indem die Steuereinheit die zwischengespeicherten Objekte in einer optimalen Reihenfolge oder Orientierung freigibt. Dies kann zu einer verbesserten Raumausnutzung im Behälter führen und die Stabilität der geladenen Objekte während des Transports erhöhen.

Der Zwischenspeicher kann in verschiedenen Formen implementiert werden, wie etwa als mechanisches Fördersystem, Pouchsorter oder statische Lagerflächen, wie Schrankflächen oder Regalbretter. Dabei kann auch vorgesehen sein, dass ein Fördersystem einer der Packstation vorgeschalteten Sortieranlage als Zwischenspeicher genutzt wird, indem zumindest eines der Objekte auf diesem Fördersystem rezirkuliert. Alternativ könnten auch Gabelspeicher eingesetzt werden.

Der Zwischenspeicher kann auch Quergurt-Elemente aufweisen, die entweder aktiv mit einem Antriebsmittel wie einem Motor betrieben werden oder passiv durch die Packstation angetrieben werden.

Auch kann vorgesehen sein, dass zwischen der Vorrichtung und einer Umgebung ein Sicherheitszaun oder eine andere geeignete Sicherheitsvorrichtung vorgesehen ist, um das Beladen des Behälters sicher durchführen zu können.

Ein weiterer Aspekt der Erfindung betrifft ein Sortierzentrum, insbesondere zur Paketsortierung, umfassend eine erfindungsgemäße Vorrichtung, die insbesondere geeignet ist, ein erfindungsgemäßes Verfahren durchzuführen. Das Sortierzentrum umfasst weiterhin eine Sortieranlage, insbesondere einen Quergutsorter, und einen Behälter, insbesondere einen Rollbehälter. Die Kommunikationseinheit der Vorrichtung ist dabei ausgebildet und eingerichtet, die Informationen zu mehreren, insbesondere in einem definierten Zeitintervall, von der Vorrichtung zu empfangenen Objekten von der Sortieranlage zu erhalten und den Behälter basierend auf der bestimmten Beladung mit zumindest einem der zu empfangenden Objekte zu beladen.

Die Sortieranlage ist der Vorrichtung dabei vorgeschaltet und ausgebildet und eingerichtet, die Objekte, beispielsweise Pakete, zu sortieren und dann der Vorrichtung zuzuführen. Dazu kann die Sortieranlage beispielsweise ein Bemessungs-/Wiegesystem aufweisen. Durch diese Anordnung und das Bereitstellen der Informationen zu den zu empfangenden Objekten kann die Vorrichtung eine Beladung des Behälters vorteilhaft bestimmen, so dass eine verfügbare Kapazität des Behälters optimal genutzt werden kann. Ein Vorteil dieser Konfiguration ist somit eine erhöhte Effizienz und Genauigkeit beim Beladen des Behälters, da die Vorrichtung in der Lage ist, die erhaltenen Informationen zu verarbeiten und die Objekte entsprechend zu platzieren.

Das Sortierzentrum kann eine oder mehrere erfindungsgemäße Vorrichtungen umfassen. So kann vorgesehen sein, dass eine Vorrichtung eine bestimmte Anzahl von Behältern belädt. Wenn die bestimmte Beladung vorsieht, einen bestimmten Behälter mit einem Objekt zu beladen, kann dann beispielsweise die entsprechende Vorrichtung zum Beladen ausgewählt werden. Das Auswählen und Ansteuern der Vorrichtung können dabei insbesondere mittels der Steuereinheit erfolgen.

Ein weiterer Aspekt der Erfindung betrifft ein Computerprogrammprodukt, insbesondere ein Steuerprogramm für eine Steuereinheit, umfassend Befehle, die bewirken, dass eine erfindungsgemäße Vorrichtung und/oder ein erfindungsgemäßes Sortierzentrum ein erfindungsgemäßes Verfahren ausführen.

Dieser Aspekt der Erfindung ist insbesondere, aber nicht ausschließlich, vorteilhaft, da die vorliegende Erfindung durch ein Computerprogrammprodukt erreicht werden kann, das es einem Computersystem ermöglicht, die Vorgänge der erfindungsgemäßen Vorrichtung und/oder des erfindungsgemäßen Sortierzentrums auszuführen, wenn es in das Computersystem herunter- oder hochgeladen wird. Ein solches Computerprogrammprodukt kann auf jeder Art von computerlesbarem Medium oder über ein Netzwerk bereitgestellt werden.

Die erfindungsgemäße Vorrichtung und das erfindungsgemäße Sortierzentrum sind insbesondere zur Durchführung des erfindungsgemäßen Verfahrens geeignet. Die für das erfindungsgemäße Verfahren offenbarten Details und Vorteile sind auf die erfindungsgemäße Vorrichtung, das erfindungsgemäße Sortierzentrum sowie das erfindungsgemäße Computerprogrammprodukt übertrag- und anwendbar und umgekehrt.

Weitere Einzelheiten der Erfindung werden anhand der nachstehenden Figuren erläutert. Dabei zeigt:
- Figur 1: ein Ausführungsbeispiel eines erfindungsgemäßen Sortierzentrums;
- Figur 2: ein Ausführungsbeispiel einer erfindungsgemäßen Packstation;
- Figur 3: ein weiteres Ausführungsbeispiel eines erfindungsgemäßen Sortierzentrums;
- Figur 4: ein Ausführungsbeispiel einer Packstation einer erfindungsgemäßen Vorrichtung und einen Behälter;
- Figur 5: ein Ausführungsbeispiel einer Packstation einer erfindungsgemäßen Vorrichtung, bei der verfahrbare Einheiten in den Behälter bewegt wurden.
- Figur 6: ein Ausführungsbeispiel einer Packstation einer erfindungsgemäßen Vorrichtung in perspektivischer Darstellung;
- Figur 7: ein Ausführungsbeispiel eines Endeffektors einer erfindungsgemäßen Vorrichtung mit einer Vielzahl verfahrbarer Einheiten in einer eingezogenen Position;
- Figur 8: ein Ausführungsbeispiel eines Endeffektors einer erfindungsgemäßen Vorrichtung mit drei verfahrbaren Einheiten in einer ausgefahrenen Position;
- Figur 9: ein Ausführungsbeispiel eines Endeffektors einer erfindungsgemäßen Vorrichtung mit einer Vielzahl verfahrbarer Einheiten, die jeweils eine Führung aufweisen;
- Figur 10: in verschiedenen Darstellungen das Befördern und Entladen eines Pakets mittels verfahrbarer Einheiten eines Endeffektors;
- Figur 11: ein Ausführungsbeispiel einer Packstation einer erfindungsgemäßen Vorrichtung, die eine auf einer Schiene bewegliche Plattform aufweist, um Pakete an verschiedene Behälter zu liefern;
- Figur 12: das Ausführungsbeispiel aus Abb. 8, wobei drei der verfahrbaren Einheiten gleichzeitig in einen der Behälter ausgefahren sind;
- Figur 13: ein Ausführungsbeispiel eines erfindungsgemäßen Sortierzentrums, bei dem ein Paket von einem Förderband an eine Packstation einer erfindungsgemäßen Vorrichtung geliefert wird;
- Figur 14: ein Ausführungsbeispiel eines erfindungsgemäßen Sortierzentrums, aufweisend Zwischenspeicher zur Lagerung von Paketen;
- Figur 15: in zwei Darstellungen ein Ausführungsbeispiel eines Greifwerkzeugs zum Entladen von Paketen für eine erfindungsgemäße Vorrichtung;
- Figur 16: ein Ausführungsbeispiel eines Haltemechanismus, der verhindert, dass Pakete kippen;
- Figur 17: ein Ausführungsbeispiel eines trapezförmigen Fingers, der als eine Verringerung der Dicke eines vorderen Endes verfahrbarer Einheiten einer erfindungsgemäßen Vorrichtung ausgeführt ist; und
- Figur 18: ein schematisches Flussdiagramm, das Verfahrensschritte zum Beladen eines Behälters mittels eines Endeffektors aufweisend eine Vielzahl verfahrbarer Einheiten veranschaulicht.

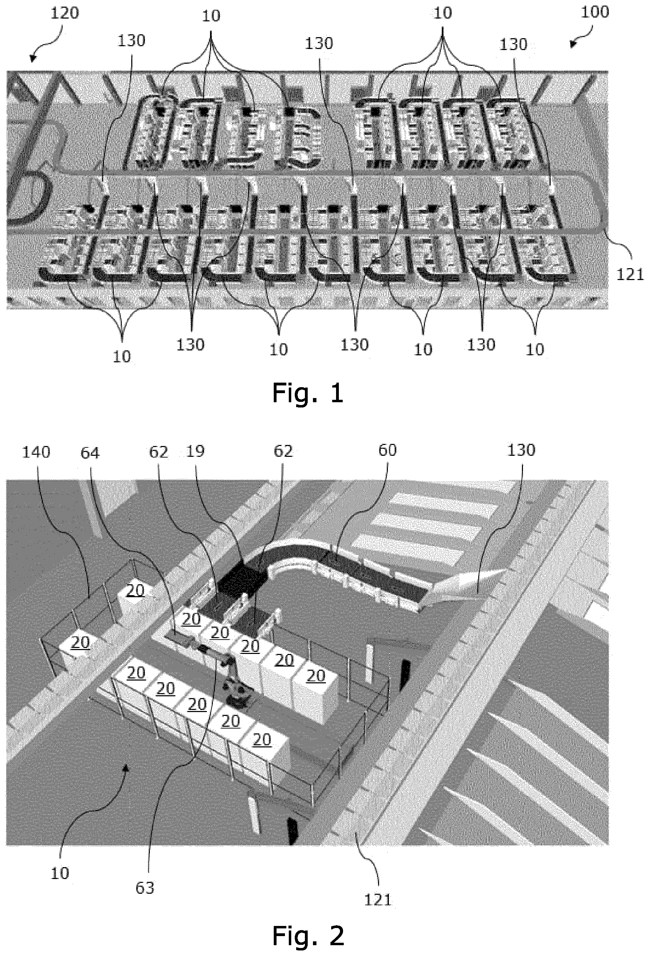

Figur 1 zeigt in schematischer Darstellung eine Ausführungsform eines Sortierzentrums 100. Auf der linken Seite ist eine Sortieranlage 120 angeordnet, die zu beladene Objekte an einen Quergutsorter 121 weitergibt. Von diesem werden die Objekte an einzelne Packstationen 10 zum Beladen von Behältern übergeben. Das Übergeben von dem Quergutsorter 121 an die Packstationen kann dabei beispielsweise mittels Rutschen 130 erfolgen.

Figur 2 zeigt in schematischer Darstellung eine Ausführungsform einer Packstation 10, beispielsweise des Sortierzentrums 100 aus Fig. 1. Über die Rutsche 130 werden zu empfangende Objekte von dem Quergutsorter 121 dem Zuführförderband 60 zugeführt. Über das Zuführförderband 60 erreichen die Objekte eine Objektannahme 19. Diese ist zumindest in einer Richtung verfahrbar, so dass ein oder mehrere Objekte von der Objektannahme 19 an, hier als Regalfächer ausgeführte, Zwischenspeicher 62 übergeben werden können. Dazu kann die Objektannahme 19 beispielsweise ein Förderband aufweisen oder als ein Förderband ausgeführt sein.

Anstatt, dass ein Objekt in einem Zwischenspeicher 62 gelagert wird, kann das Objekt mittels eines Knickarmroboters 63, insbesondere mittels eines als Greifwerkzeug 64 ausgeführten Endeffektors des Knickarmroboters 63 gegriffen und in einen der Behälter 20 geladen werden.

Um einen Betrieb der Packstation 10 möglichst sicher zu gestalten, weist diesen einen Sicherheitszaun 140 auf, um eine Abgrenzung zur Umgebung herzustellen.

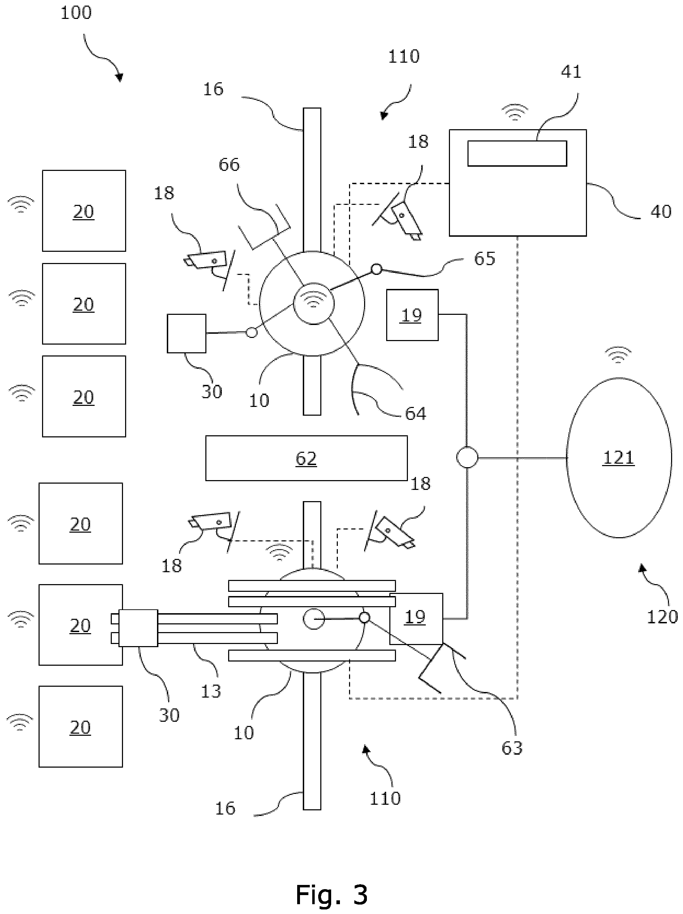

Figur 3 zeigt in schematischer Darstellung eine Ausführungsform eines Sortierzentrums 100, hier zur Paketsortierung, umfassend zwei Vorrichtungen 110 zum Beladen von Behältern 20 mit Objekten 30. Die Objekte sind hier im Wesentlichen Pakete 30.

Den beiden Vorrichtungen 110 vorgelagert ist eine Sortieranlage 120, die hier einen Quergutsorter 121 aufweist. In der Sortieranlage 120 können die Pakete 30 sortiert und dann den beiden Vorrichtungen 110 zum Beladen der Behälter 20 zugeführt werden. Die Behälter 20 sind hier als Rollbehälter ausgeführt und sind hinter den Vorrichtungen 110 aufgestellt.

Die Vorrichtungen 110 umfassen eine gemeinsame Kommunikationseinheit 41, die ausgebildet und eingerichtet ist, Informationen zu mehreren, insbesondere in einem definierten Zeitintervall, von der Vorrichtung 110 zu empfangenden Paketen 30 und Informationen zu einem Beladungszustand der Behälter 20 zu erhalten. Die Kommunikationseinheit 41 ist hier als Teil einer Steuereinheit 40 der Vorrichtung 110 ausgebildet und mit der Steuereinheit 40 signalverbunden. Die Steuereinheit 40 ist ausgebildet und eingerichtet, basierend auf den erhaltenen Informationen eine Beladung der Behälter 20 mit den zu empfangenden Paketen 30, insbesondere eine Reihenfolge und/oder Orientierung der zu empfangenden Pakete 30, zu bestimmen.

Die Vorrichtungen 110 weisen weiterhin jeweils eine Packstation 10 auf, die jeweils zumindest zwei Endeffektoren zum Beladen eines Pakets 30 umfassen. Die Steuereinheit 40 ist ausgebildet und eingerichtet, basierend auf der bestimmten Beladung zum Beladen eines Behälters 20 einen geeigneten Endeffektor der jeweiligen Packstation 10 auszuwählen und anzusteuern.

Weiterhin weisen die Vorrichtungen 110 einen gemeinsamen Zwischenspeicher 62 auf, der hier als ein Regalspeicher ausgeführt ist. Der gemeinsame Zwischenspeicher 62 kann alternativ aber auch als eine Pufferstelle, ein Zwischenlager und/oder ein Fördersystem ausgeführt sein. Weiterhin kann jede Vorrichtung 110 einen oder mehrere individuelle Zwischenspeicher 62 aufweisen.

Die Steuereinheit 40 ist ausgebildet und eingerichtet, ein zu empfangendes Paket 30 in dem Zwischenspeicher 62 zwischenzulagern, beispielsweise wenn die Vorrichtungen 110 gerade ausgelastet sind und/oder das zwischenzulagernde Paket 30 zu einem späteren Zeitpunkt beladen werden soll.

Die Kommunikationseinheit 41 der Vorrichtungen 110 ist ausgebildet und eingerichtet, die Informationen zu mehreren, insbesondere in einem definierten Zeitintervall, von den Vorrichtungen 110 zu empfangenen Paketen 30 von der Sortieranlage 120 zu erhalten. Hierzu sind die Kommunikationseinheit 41 und die Sortiereinheit 121 kabellos miteinander signalverbunden. Auch die Behälter 20 sowie die Packstationen 10 sind ausgebildet und eingerichtet, kabellos mit der Kommunikationseinheit 41 Informationen auszutauschen. So kann ermöglicht werden, dass zum Bestimmen der Beladung erforderliche Informationen in der Kommunikationseinheit 41 zusammenlaufen und an die Steuereinheit 40 übergeben werden können.

Die in den Figuren 1 bis 3 dargestellten Ausführungsformen eines Sortierzentrums 100 oder einer Packstation 10 sind insbesondere in der Lage, ein Verfahren zum Beladen der Behälter 20 mit Paketen 30, umfassend die folgenden Schritte, durchzuführen:
- Mittels einer Kommunikationseinheit 41, Erhalten von Informationen zu mehreren, insbesondere in einem definierten Zeitintervall, zu empfangenen Paketen 30 von der Sortieranlage 120;
- Mittels der Kommunikationseinheit 41, Erhalten von Informationen zu einem Beladungszustand der Behälter 20;
- Mittels der Steuereinheit 40, Bestimmen einer Beladung der Behälter 20 mit den zu empfangenden Paketen 30, insbesondere Bestimmen eines Zielbereichs in einem Behälter 20, einer Reihenfolge der zu empfangenden Pakete 30 und/oder einer Orientierung der zu empfangenden Pakete 30;
- Basierend auf der bestimmten Beladung, insbesondere basierend auf einem bestimmten Zielbereich der zu empfangenden Pakete 30, Beladen der Behälter 20 mit dem empfangenen Paket 30 mittels einer Packstation 10.

Dabei kann insbesondere vorgesehen sein, dass das Erhalten von Informationen zu den zu empfangenen Paketen 30 und/oder zu dem Beladungszustand im Wesentlichen kontinuierlich erfolgt und das Bestimmen, basierend auf den im Wesentlichen kontinuierlich erhaltenen Informationen, dynamisch aktualisiert wird. Die Informationen zu den zu empfangenen Paketen 30 umfassen insbesondere eine Form, ein Gewicht und/oder einen Typ der zu empfangenen Pakete 30.

Alternativ oder zusätzlich kann vorgesehen sein, dass basierend auf dem Erhalten von Informationen zu den zu empfangenen Paketen 30 ein Kategorisieren zumindest eines der zu empfangenen Pakete 30 erfolgt und wobei das Bestimmen der Beladung der Behälter 20, insbesondere eines Zielbereichs in einem Behälter 20 für zumindest ein zu empfangendes Paket 30, und/oder das Beladen des Behälters 20 mit dem zumindest einen zu empfangenden Paket 30 basierend auf dem Kategorisieren des zumindest einen zu empfangenden Paket 30 erfolgt.

So können beispielsweise basierend auf Informationen von einer Erfassungseinheit 19 ankommende Pakete 30 in Kategorien eingeordnet werden und dann speziell gehandhabt werden. So kann von diesem Kategorisieren eine Geschwindigkeit des Beladens oder ein geeigneter Endeffektor der Packstation 10 ausgewählt werden. Auch eine Entladeposition kann von dem Kategorisieren abhängen, beispielsweise durch Berücksichtigen einer Stapelfähigkeit eines Pakets 30.

Erfasst eine Erfassungseinheit 19 beispielsweise ein Paket 30, kann dieses als Weinflasche kategorisiert werden, um dann eine Beladegeschwindigkeit zu reduzieren und eine spezielle Platzierung in einem Behälter vorgesehen werden. Erfasst eine Erfassungseinheit 10 beispielsweise ein Polybag mit Socken, kann dieses Paket 30 für eine robustere Handhabung klassifiziert werden, so dass es beispielsweise schneller verladen werden kann und auch in Lücken im Behälter 20 abgeworfen werden darf.

Beim Kategorisieren kann auch eine Analyse von, insbesondere regelmäßig auftretenden, Paketmengen berücksichtigt werden. Kommt beispielsweise regelmäßig zu bestimmten Zeiten eine bestimmte Menge an Paketen 30 mit Kleidung, können diese Pakete generell für eine robuste Handhabung kategorisiert werden, ohne dass hierzu erst eine Information durch eine Erfassungseinheit 19 erforderlich ist.

Es kann weiterhin vorgesehen sein, basierend auf der bestimmten Beladung, insbesondere basierend auf einer bestimmten Reihenfolge der zu empfangenden Pakete 30, ein Auswählen von zumindest einem der zu empfangenden Pakete 30 durchzuführen. So können die Pakete 30 auch in einer anderen Reihenfolge als sie an der Packstation 10 ankommen, beladen werden.

Das Verfahren kann auch ein Verarbeiten historischer Daten, insbesondere der erhaltenen Daten Informationen und/oder von Ankunftszeitpunkten oder Paketvolumen umfassen, wobei das Bestimmen der Beladung unter Berücksichtigung der historischen Daten erfolgt, insbesondere indem das Bestimmen der Beladung eine lokale Vorhersage, insbesondere eines Sortieraufkommens, umfasst. Dadurch können regelmäßig auftretende Schwankungen in einem Beladeaufkommen effizienter abgearbeitet werden.

Insbesondere das Bestimmen der Beladung in zumindest einem lokalen System wie einer Packstation 10 erfolgen, umfassend ein Aggregieren der bestimmten Beladung, insbesondere einer lokalen Vorhersage, des lokalen Systems 20 durch ein zentrales System wie dem Sortierzentrum 100 und ein Erstellen einer übergeordneten Nachfrageprognose durch das zentrale System 100, insbesondere umfassend ein Berücksichtigen komplexer Muster wie saisonale Schwankungen, Spitzenzeiten und/oder regionale Unterschiede, beispielsweise durch Nutzen maschinellen Lernens. So kann insbesondere eine Auslastung einzelner Packstationen 20 und/oder Vorrichtungen 100 wie Roboter besser gesteuert werden.

Zur weiteren Optimierung kann dabei vorgesehen sein, dass das Erstellen der übergeordneten Nachfrageprognose eine Analyse langfristiger Muster und/oder komplexer räumlicher und zeitlicher Beziehungen umfasst, insbesondere durch das Nutzen maschinellen Lernens mit Long short-term memory (LSTM) und/oder einem Convolutional Neural Network (CNN).

Weiterhin kann ein Überprüfen der zu empfangenden Pakete 30 und/oder der Behälter 20 und ein Verifizieren der bestimmten Beladung anhand des Überprüfens vorgesehen sein. Hierzu weisen die Vorrichtungen 110 hier als Kameras ausgeführt Erfassungseinheiten 18 auf, die jeweils mit einer der Packstationen 10 signalverbunden sind. So können hier jeweils zwei Kameras 18 die zu empfangenden Pakete 30 überwachen und jeweils zwei Kameras 18 die Behälter überwachen.

Das Verifizieren kann dabei insbesondere ein Vergleichen des Überprüfens mit den erhaltenen Informationen umfassen. Somit kann ein Beladungszustand der Behälter 20 und ein Zustand zu empfangender Pakete 30 aktuell und korrekt gehalten werden. Beispielsweise kann so identifiziert werden, wenn sich eine Reihenfolge der Pakete 30 bei der Zuführung verändert oder ein Paket 30 von einer Zuführung gefallen ist.

Das Sortierzentrum 100 kann mittels der Steuereinheit 40 und den zur Verfügung stehenden Informationen auch eine Füllstandsprüfung der Behälter 20 durchführen, wobei die Füllstandsprüfung ein Abgleichen zwischen dem Beladungszustand eines Behälters 20 und der bestimmten Beladung umfasst. Basierend auf der Füllstandsprüfung kann die Steuereinheit ein Wechseln eines oder mehrerer Behälter 20 veranlassen.

Auch kann die Steuereinheit 40 ein Zwischenspeichern eines zu empfangenden Pakets 30, basierend auf der bestimmten Beladung, in dem Zwischenspeicher 62 veranlassen. Weiterhin kann die Steuereinheit 40 ein Zwischenspeichern veranlassen, indem ein zu empfangendes Paket 30 vorerst auf dem Quergurtsorter 121 verbleibt.

Die Packstationen 10 können insbesondere einen Roboter umfassen oder als ein solcher ausgeführt sein. So umfasst die obere Packstation 10 in Figur 3 ein drehbares Oberteil, an dem mehrere Endeffektoren angeordnet sind. So weist die obere Packstation 10 beispielsweise zwei Teleskoparme 65 auf, über die ein Paket 30 gegriffen werden kann. So kann die Steuereinheit 40 beispielsweise durch Rotation des Oberteils der oberen Packstation 10 einen der Teleskoparme 65 auswählen, so dass der ausgewählte Teleskoparm 65 ein zu empfangendes Paket 30 aufnimmt und durch ein weiteres Drehen des Oberteils und/oder Bewegen des Teleskoparms 65 in einen Behälter 20 lädt.

Weiterhin weist die obere Packstation 10 der Figur 3 einen als parallelen Greifer 66 und einen als Greifwerkzeug 64 ausgeführten Endeffektor auf. Die Steuereinheit 40 kann somit anhand der bestimmten Beladung sowie der Beschaffenheit der zu empfangenden Pakete 30 einen geeigneten Endeffektor auswählen und ansteuern, um ein Paket 30 zu beladen. Insbesondere können so auch mehrere Pakete 30 gleichzeitig verarbeitet werden.

Auch die untere Packstation 10 der Figur 3 weist mehr als einen Endeffektor auf, so dass auch für diese Packstation 10 die Steuereinheit 40 anhand der bestimmten Beladung sowie der Beschaffenheit der zu empfangenden Pakete 30 einen geeigneten Endeffektor auswählen und ansteuern kann, um ein Paket 30 zu beladen. Insbesondere können so auch mehrere Pakete 30 gleichzeitig verarbeitet werden.

Die untere Packstation 10 in Figur 3 weist einen als Knickarmroboter 63 ausgeführten Endeffektor auf. Weiterhin weist sie einen als eine Vielzahl verfahrbarer Einheiten 13 ausgeführten Endeffektor auf. Mittels der verfahrbaren Einheiten 13 kann ein Paket 30 an eine Entladeposition 50 befördert und dort, beispielsweise durch Zurückfahren der Einheiten 13, entladen werden. Die beiden Endeffektoren der unteren Packstation 10 können dabei auch zusammenarbeiten, beispielsweise indem der Knickarmroboter 63 ein Paket 30 empfängt und auf einer oder mehreren verfahrbaren Einheiten 13 zum Weitertransport ablegt.

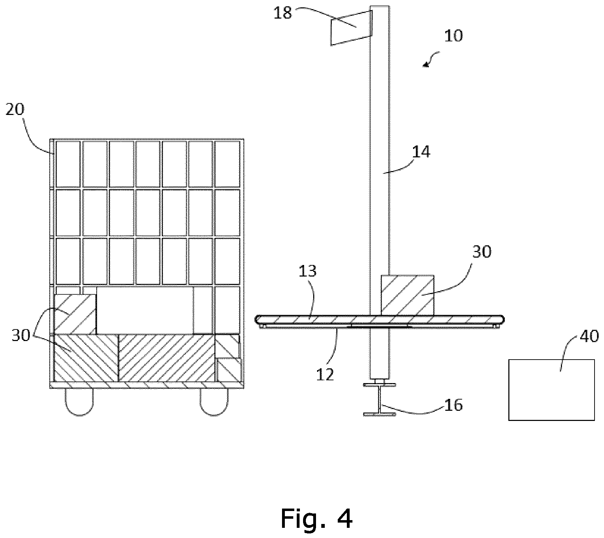

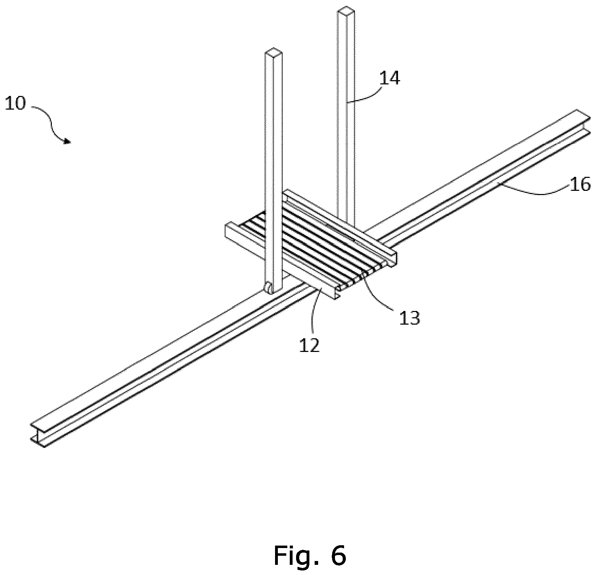

Figur 4 zeigt eine Packstation 10, die eine bewegliche Plattform 12 umfasst, die auf einer Strebe 14 montiert ist, wobei sich die Strebe 14 auf einer Schiene 16 in einer Querrichtung hin und her bewegen kann. Die bewegliche Plattform 12 kann sich auf der Strebe 14 in einer vertikalen Richtung auf und ab bewegen. Die bewegliche Plattform 12 umfasst eine Vielzahl von verfahrbaren Einheiten 13 (siehe Fig. 6). Die verfahrbaren Einheiten 13 können einzeln aus- oder eingefahren werden, oder zwei oder mehr verfahrbare Einheiten 13 können gemeinsam aus- oder eingefahren werden, um Pakete 30 in einen als Paketempfangseinheit ausgeführten Behälter 20 zu befördern.

Eine Erfassungseinheit 18 erkennt einen freien Raum in der Paketempfangseinheit 20 und die Größe und Position des Pakets 30 auf den verfahrbaren Einheiten 13. Eine Steuereinheit 40 empfängt Informationen von der Erfassungseinheit 18 und ermittelt, insbesondere beim Bestimmen der Beladung, eine bestimmte Position in der Paketempfangseinheit 20. Die Steuereinheit 40 steuert außerdem die Bewegung der Packstation 10, der verfahrbaren Einheiten 13 und des Pakets 30, um das Paket 30 in eine Entladeposition zu bewegen, von wo aus es in die bestimmte Position in der Paketempfangseinheit 20 entladen werden kann. Es können lokale Steuerungen an der Packstation 10 vorhanden sein, die mit der Steuereinheit 40 kommunizieren, möglicherweise drahtlos. Außerdem kann die Erfassungseinheit 18 mit der Steuereinheit 40 kommunizieren. Antriebe oder Motoren zum Antrieb der Packstation 10 und der verfahrbaren Einheiten 13 sind nicht dargestellt.

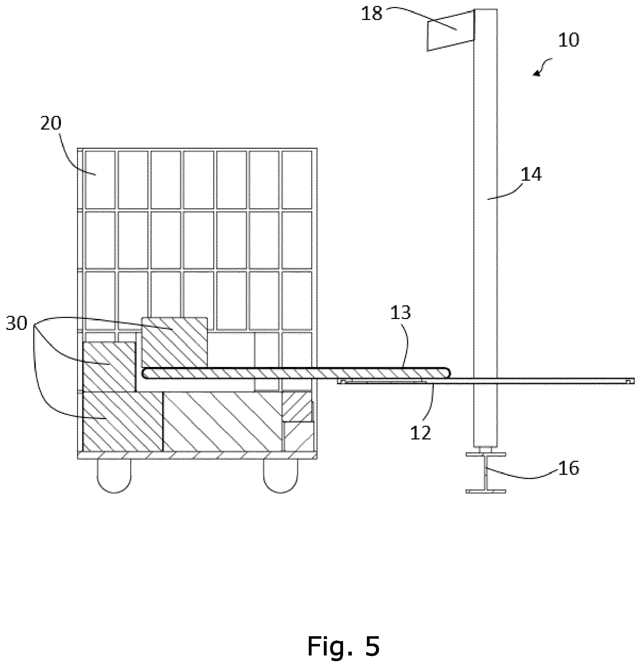

Figur 5 zeigt die Packstation 10 aus Figur 4, wobei zumindest einige der verfahrbaren Einheiten 13 in die Paketempfangseinheit 20 ausgefahren wurden, um ein Paket 30 in die Paketempfangseinheit 20 einzulegen. In Fig. 5 ist das Paket 30 auf den verfahrbaren Einheiten 13 in der Entladeposition direkt über anderen Paketen 30 dargestellt, wodurch das Paket 30 bereit ist, an der bestimmten Position in der Paketempfangseinheit 20 platziert zu werden.

Figur 6 zeigt die Packstation 10 in perspektivischer Darstellung. Die Packstation 10 umfasst die bewegliche Plattform 12 mit einer Vielzahl von verfahrbaren Einheiten 13. Die bewegliche Plattform 12 ist auf einer Strebe 14 montiert und die Strebe 14 ist auf einer Schiene 16 platziert. Die Strebe 14 kann sich auf der Schiene 16 in Querrichtung hin und her bewegen und die bewegliche Plattform 12 kann sich auf der Strebe 14 in vertikaler Richtung auf und ab bewegen.

Dadurch kann die Position der beweglichen Plattform 12 und der verfahrbaren Einheiten 13 präzise eingestellt werden, sodass die verfahrbaren Einheiten 13 in der Paketempfangseinheit 20 positioniert werden können, um das Paket 30 genau an der bestimmten Position in der Paketempfangseinheit 20 abzuliefern. Außerdem kann die Übergabe des Pakets 30 von der Entladeposition zur bestimmten Position von einer Position aus erfolgen, die geringfügig über der bestimmten Position liegt, um das Paket 30 genau an der bestimmten Position mit einer minimalen Fallhöhe abzulegen.

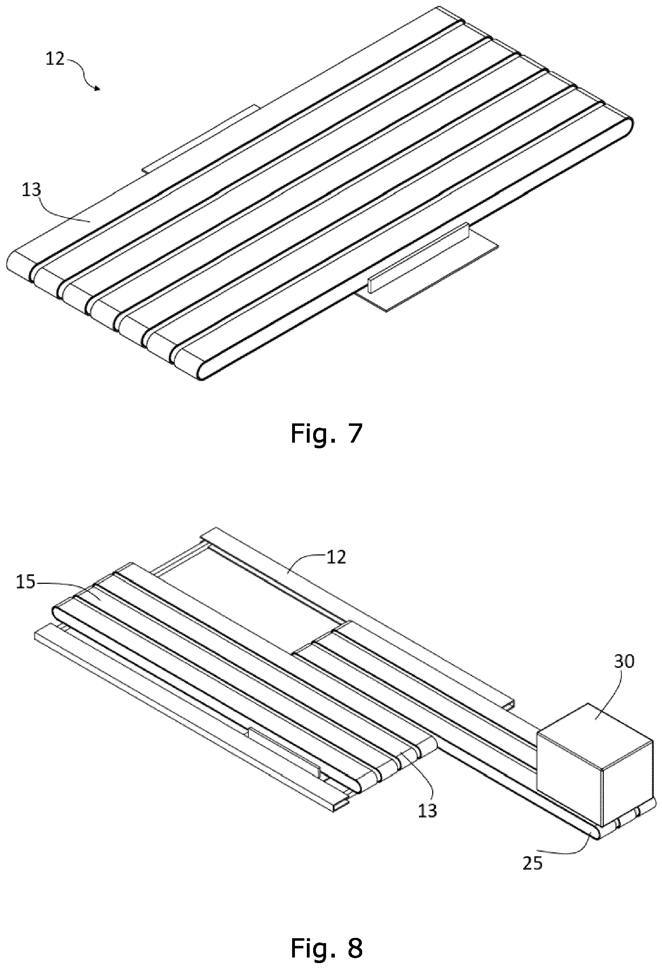

Figur 7 zeigt eine bewegliche Plattform 12 mit einer Vielzahl von verfahrbaren Einheiten 13, in diesem Fall sieben. Die verfahrbaren Einheiten 13 befinden sich alle in ihrer eingezogenen Position. Jede der verfahrbaren Einheiten 13 kann sich einzeln in Längsrichtung bewegen, oder zwei oder mehr benachbarte verfahrbare Einheiten können gemeinsam ausgefahren werden. Jede der verfahrbaren Einheiten 13 umfasst ein Förderband 15, um Pakete 30, die auf der verfahrbaren Einheit 13 platziert sind, zu bewegen.

Figur 8 zeigt die bewegliche Plattform 12 aus Figur 7 mit sieben verfahrbaren Einheiten 13. Drei der verfahrbaren Einheiten 13 wurden ausgefahren, um ein Paket 30 zu liefern. Das Paket 30 wird in der Entladeposition am vorderen Ende 25 der ausgefahrenen verfahrbaren Einheiten 13 platziert. Jede der verfahrbaren Einheiten 13 in dieser Ausführungsform umfasst ein Förderband 15. Die Förderbänder 15 können sich gemeinsam bewegen, um die Pakete 30 zur Entladeposition zu befördern. Figur 8 veranschaulicht, dass einige der verfahrbaren Einheiten 13, in diesem Fall drei, gemeinsam bewegt werden können, um ein Paket 30, das nicht von einer einzelnen verfahrbaren Einheit 13 befördert werden kann, zur Entladeposition zu befördern.

Außerdem ist dargestellt, dass die nicht zum Tragen des Pakets 30 benötigten verfahrbaren Einheiten 13 nicht ausgefahren werden, sondern in ihrer eingefahrenen Position bleiben.

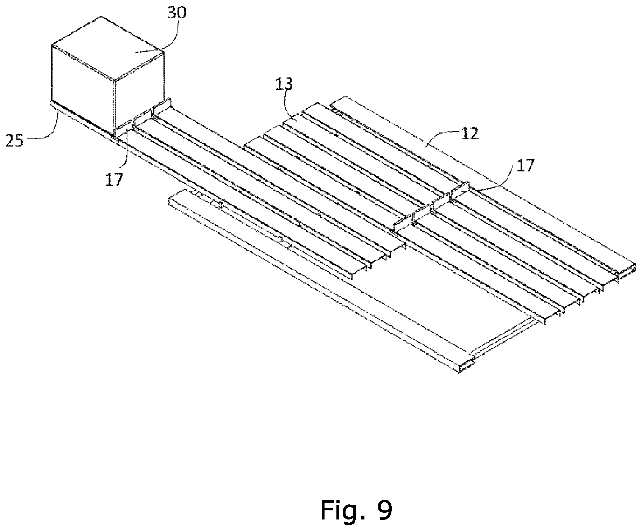

Figur 9 zeigt eine weitere Ausführungsform der beweglichen Plattform 12 mit einer Vielzahl von verfahrbaren Einheiten 13. Jede der verfahrbaren Einheiten 13 in dieser Ausführungsform umfasst eine Führung 17. Die Führung 17 schiebt das Paket 30 nach vorne in die Entladeposition am vorderen Ende 25 der verfahrbaren Einheiten 13, und schließlich schiebt die Führung 17 das Paket 30 von den verfahrbaren Einheiten 13. Drei der verfahrbaren Einheiten 13 wurden hier ausgefahren, um ein Paket 30 auszuliefern; das Paket 30 wird so in die Entladeposition gebracht.

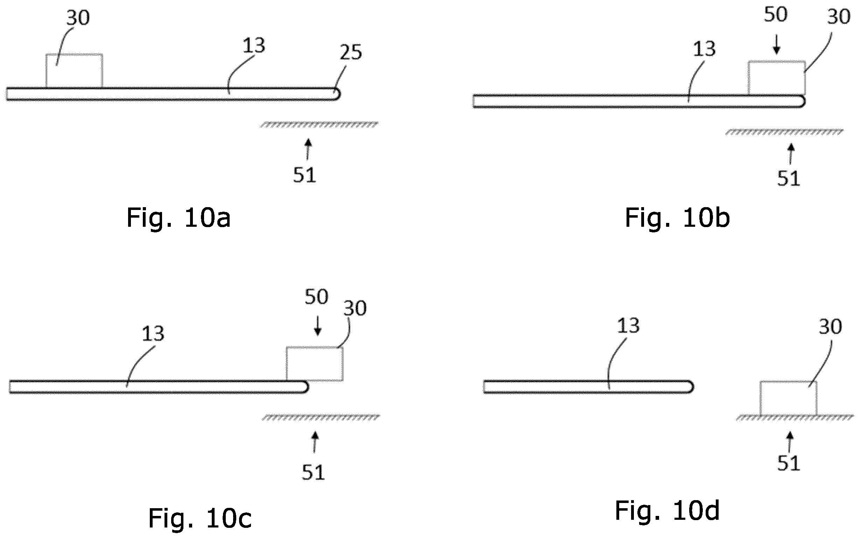

Figur 10 mit den Einzeldarstellungen 10a-d zeigt, wie die verfahrbaren Einheiten 13 ein Paket 30 zu einer Entladeposition 50 befördern und das Paket 30 in einer Paketempfangseinheit 20 in eine bestimmte Position 51 entladen. In Figur 10a befördern die verfahrbaren Einheiten 13 ein Paket 30 und haben das vordere Ende 25 der verfahrbaren Einheiten 13 ausgefahren, um das Paket 30 über der bestimmten Position 51 zu platzieren. In Figur 10b wird das Paket 30 nach vorne in eine Entladeposition 50 über der bestimmten Position 51 bewegt, sodass das Paket 30 in Figur 10b in der Entladeposition 50 abgestützt wird. Dann werden in Figur 10c die verfahrbaren Einheiten 13 eingezogen, während sich die Förderbänder 15 vorwärtsbewegen, sodass das Paket 30 in der Entladeposition 50 bleibt und sich von den verfahrbaren Einheiten 13 wegbewegt. Schließlich sind in Figur 10d die verfahrbaren Einheiten 13 eingezogen und das Paket 30 ist in die bestimmte Position 51 in der Paketempfangseinheit 20 gefallen.

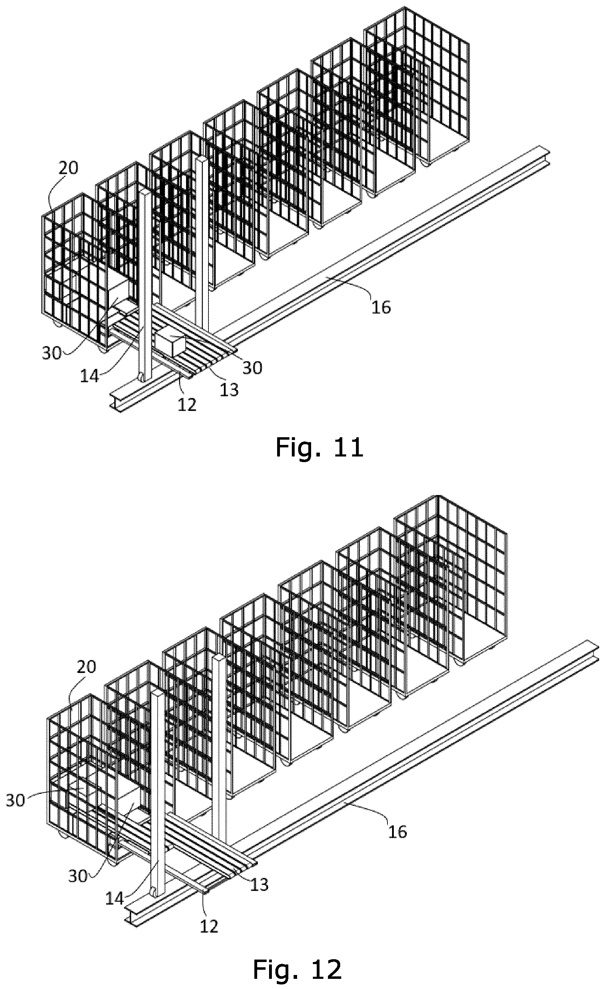

Figur 11 zeigt ein Beladesystem mit mehreren, in diesem Fall sieben, Paketempfangseinheiten 20. Hier kann sich die bewegliche Plattform 12 entlang der Schiene 16 hin und her bewegen, um Pakete 30 zu empfangen und in verschiedenen Paketempfangseinheiten 20 zu stapeln. Außerdem kann sich die bewegliche Plattform 12 entlang der Strebe 14 auf und ab bewegen, um die Höhe anzupassen und ein Paket 30 an die bestimmte Position in der ausgewählten Paketempfangseinheit 20 zu liefern, in Übereinstimmung mit anderen Paketen 30, die sich bereits in der Paketempfangseinheit 20 befinden.

Figur 12 zeigt das System aus Figur 11, wobei drei der verfahrbaren Einheiten 13 gleichzeitig in eine der Paketempfangseinheiten 20 ausgefahren sind und sich das Paket 30 in der Entladeposition auf den ausgefahrenen verfahrbaren Einheiten 13 befindet, bereit, in die bestimmte Position in der Paketempfangseinheit 20 fallen gelassen zu werden. Die verfahrbaren Einheiten 13 sind in einem freien Raum neben einem anderen Paket 30 positioniert, um die Höhe zu verringern, aus der das Paket 30 in die ausgewählte Position herabfällt.

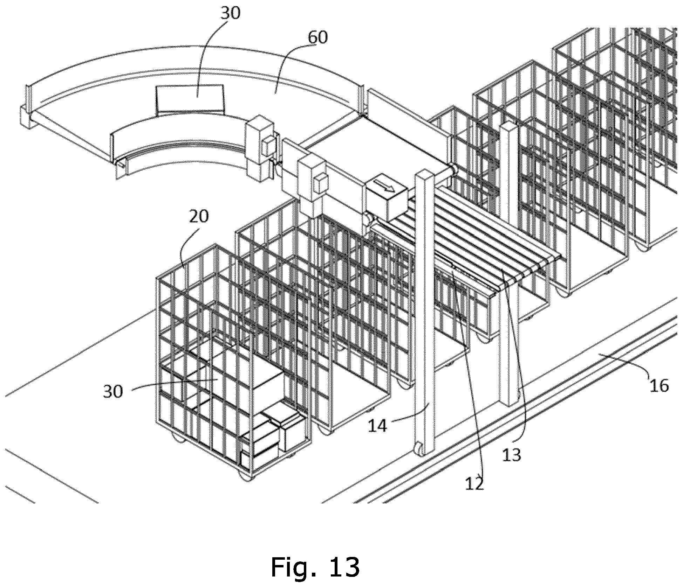

Figur 13 zeigt, dass ein Paket 30 von einem Zuführförderband 60 an die bewegliche Plattform 12 geliefert wird. Alternativ kann das Paket 30 über eine Rutsche oder manuell durch einen Mitarbeiter 30 geliefert werden. Die bewegliche Plattform 12 befindet sich in einer ersten Position, in der sie das Paket 30 vom Zuführförderband 60 empfangen kann. Wenn die bewegliche Plattform 12 das Paket 30 empfangen hat, bewegt sie sich in eine zweite Position, wie in den Figuren 11 und 12 dargestellt, von wo aus sie das Paket 30 zur ausgewählten Paketempfangseinheit 20 bewegen kann.

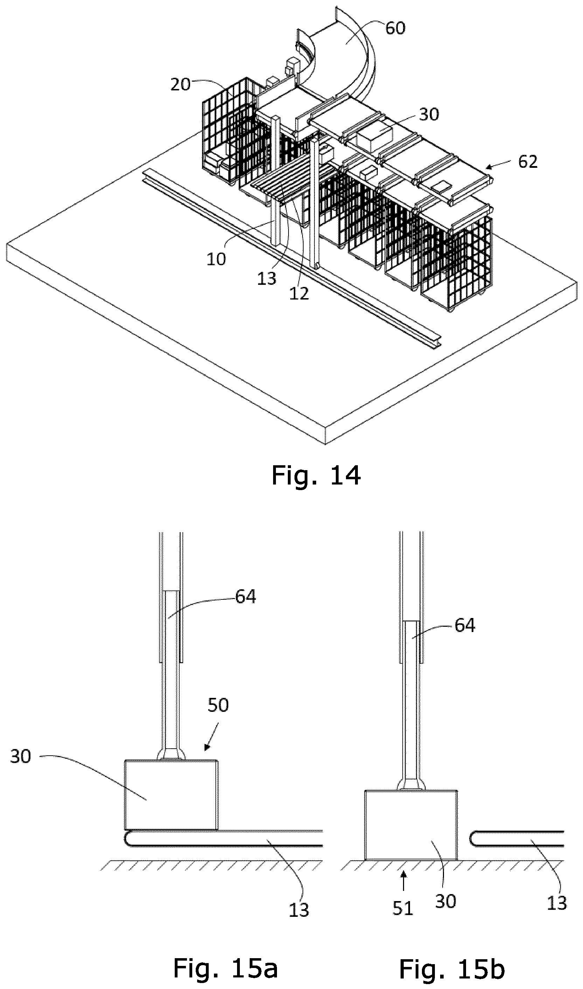

Figur 14 zeigt eine Vorrichtung mit einem Zwischenspeicher 62 zur Lagerung von Paketen 30, die derzeit nicht in einer Paketempfangseinheit 20 gestapelt werden können. Der Zwischenspeicher 62 ist hier als ein Regalspeicher mit acht Pufferförderern ausgeführt, die zur vorübergehenden Lagerung von Paketen 30 verwendet werden können. Die Packstation 10 übergibt ein Paket 30 an einen der Pufferförderer 62. Die Pakete 30 werden vorübergehend im Zwischenspeicher 62 gelagert, bis ein geeigneter Platz in der Paketempfangseinheit 20 verfügbar ist. Die Plattform 12 mit den verfahrbaren Einheiten 13 kann ein Paket 30 vom Zuführförderband 60 empfangen und das Paket 30 im Zwischenspeicher 62 ablegen. Später kann das Paket 30 entnommen und zu einer Paketempfangseinheit 20 bewegt werden.

Figur 15 mit den Einzeldarstellungen 15a und 15b zeigt eine Ausführungsform eines Endeffektors der Packstation 10 mit einem Greifwerkzeug 64 zum Entladen von Paketen 30. Das Greifwerkzeug 64 kann an der Packstation 10 montiert werden. Das Greifwerkzeug 64 kann verwendet werden, um ein Paket 30 von den verfahrbaren Einheiten 13 zur Paketempfangseinheit 20 zu bewegen. In Figur 15a greift das Greifwerkzeug 64 das Paket 30 von der Entladeposition 50 auf den verfahrbaren Einheiten 13. In Figur 15b legt das Greifwerkzeug 64 das Paket 30 nach dem Einfahren der verfahrbaren Einheiten 13 an der ausgewählten Position 51 in der Paketempfangseinheit 20 ab.

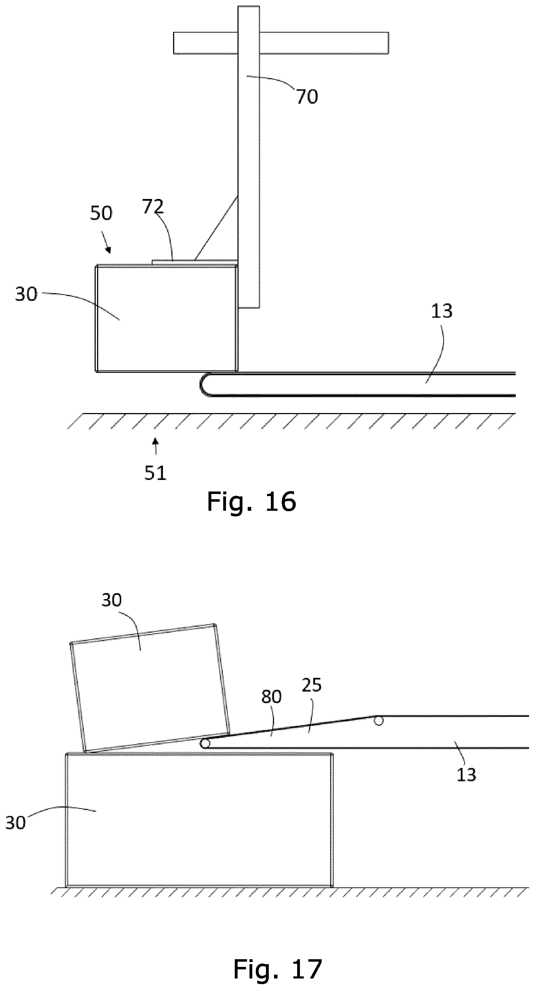

Figur. 16 zeigt einen Haltemechanismus 70, der ein Kippen der Pakete 30 verhindert. Wenn das Paket 30 in der Entladeposition 50 platziert wird, umfasst der Haltemechanismus 70 eine Halteplatte 72, die auf dem Paket 30 platziert wird, um zu verhindern, dass das Paket 30 kippt, wenn die verfahrbaren Einheiten 13 eingezogen werden. Dadurch wird sichergestellt, dass das Paket 30 beim Einziehen der verfahrbaren Einheiten 13, ohne zu kippen, in die ausgewählte Position 51 fällt. Der Haltemechanismus 70 kann an der Packstation 10 angebracht werden und wird so positioniert, dass er das Paket 30 hält, wenn sich das Paket 30 in der Entladeposition 50 befindet. Der Haltemechanismus 70 ist vertikal und horizontal beweglich, sodass die Halteplatte 72, die vertikal bewegt werden kann, auf dem Paket 30 platziert werden kann.

Fig. 17 zeigt einen trapezförmigen Finger 80, der eine Verringerung der Dicke des vorderen Endes 25 der verfahrbaren Einheiten 13 darstellt, wodurch die Fallhöhe des Pakets 30 verringert wird. Außerdem umfasst der trapezförmige Finger 80 ein schräges Ende, das es ermöglicht, das Paket 30 an der bestimmten Position allmählich zu entladen.

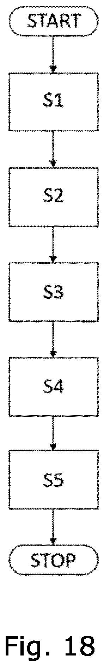

Fig. 18 zeigt ein Flussdiagramm, das Verfahrensschritte zum Beladen einer Paketempfangseinheit 20 mittels der verfahrbaren Einheiten 13 veranschaulicht. Zunächst nimmt die Packstation 10 in S1 ein Paket 30 auf, dann wird in S2 eine bestimmte Position, an der das Paket 30 platziert werden soll, beispielsweise auf der Grundlage von Informationen oder Bildern von einer Erfassungseinheit, ermittelt. Im nächsten Schritt S3 wird die bewegliche Plattform 12 in eine Position bewegt, von der aus sie das Paket 30 an die bestimmte Position in der Paketempfangseinheit 20 liefern kann.

Anschließend wird das Paket 30 in Schritt S4 zur Entladeposition befördert, indem in einem ersten Modus eine verfahrbare Einheit 13 oder in einem zweiten Modus zwei oder mehr verfahrbare Einheiten 13 ausgefahren werden. Schließlich wird das Paket 30 in Schritt S5 von der Entladeposition zur bestimmten Position entladen.

Die Erfindung kann mittels Hardware, Software, Firmware oder einer beliebigen Kombination dieser Elemente umgesetzt werden. Die Erfindung oder einige ihrer Merkmale können auch als Software implementiert werden, die auf einem oder mehreren Datenprozessoren und/oder digitalen Signalprozessoren läuft.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Packstation
- 12: Plattform
- 13: Verfahrbare Einheiten
- 14: Strebe
- 15: Förderband
- 16: Schiene
- 17: Führung
- 18: Erfassungseinheit
- 19: Objektannahme
- 20: Behälter
- 25: Vorderes Ende einer verfahrbaren Einheit
- 30: Paket
- 40: Steuereinheit
- 41: Kommunikationseinheit
- 50: Entladeposition
- 51: Bestimmte Position
- 60: Zuführförderband
- 62: Zwischenspeicher
- 63: Knickarmroboter
- 64: Greifwerkzeug
- 65: Teleskoparm
- 66: Paralleler Greifer
- 70: Haltemechanismus
- 72: Halteplatte
- 80: Trapezförmiger Finger
- 100: Sortierzentrum
- 110: Vorrichtung
- 120: Sortieranlage
- 121: Quergurtsorter
- 130: Rutsche
- 140: Sicherheitszaun

## Patentansprüche

1. Verfahren zum Beladen eines Behälters (20) mit einem Objekt (30), umfassend die Schritte:
- Erhalten von Informationen, insbesondere von einer Sortieranlage (120), zu mehreren, insbesondere in einem definierten Zeitintervall, zu empfangenden Objekten (30);
- Erhalten von Informationen zu einem Beladungszustand des Behälters (20);
- Basierend auf den erhaltenen Informationen, Bestimmen einer Beladung des Behälters (20) mit den zu empfangenden Objekten (30), insbesondere Bestimmen eines Zielbereichs in dem Behälter (20), einer Reihenfolge der zu empfangenden Objekte (30) und/oder einer Orientierung der zu empfangenden Objekte (30); und
- Basierend auf der bestimmten Beladung, insbesondere basierend auf einem bestimmten Zielbereich in dem Behälter (20), Beladen des Behälters (20) mit zumindest einem der zu empfangenden Objekte (30).

2. Verfahren nach Anspruch 1, bei dem das Erhalten von Informationen zu den zu empfangenen Objekten (30) und/oder zu dem Beladungszustand im Wesentlichen kontinuierlich erfolgt und das Bestimmen, basierend auf den im Wesentlichen kontinuierlich erhaltenen Informationen, dynamisch aktualisiert wird.

3. Verfahren nach Anspruch 1 oder 2, bei dem die Informationen zu den zu empfangenden Objekten (30) eine Form, ein Gewicht und/oder einen Typ der zu empfangenden Objekte (30) umfasst.

4. Verfahren nach einem der vorherigen Ansprüche, bei dem das Erhalten von Informationen zu den zu empfangenden Objekten (30) und/oder zu dem Beladungszustand mittels einer Erfassungseinheit erfolgt, die zumindest eine Kamera oder einen anderen optischen Sensor, einen Druck- oder Kraftsensor, einen kapazitiven Sensor, einen piezoelektrischen Sensor, einen akustischen Sensor und/oder einen Magnetfeldsensor aufweist.

5. Verfahren nach einem der vorherigen Ansprüche, bei dem basierend auf dem Erhalten von Informationen zu den zu empfangenen Objekten (30) ein Kategorisieren zumindest eines der zu empfangenen Objekte (30) erfolgt und wobei das Bestimmen der Beladung des Behälters (20), insbesondere des Zielbereichs in dem Behälter (20) für das zumindest eine zu empfangende Objekt (30), und/oder das Beladen des Behälters (20) mit dem zumindest einen zu empfangenden Objekt (30) basierend auf dem Kategorisieren des zumindest einen zu empfangenden Objekts (30) erfolgt.

6. Verfahren nach einem der vorherigen Ansprüche, bei dem basierend auf der bestimmten Beladung, insbesondere basierend auf einer bestimmten Reihenfolge der zu empfangenden Objekte (30), ein Auswählen von zumindest einem der zu empfangenden Objekte (30) erfolgt.

7. Verfahren nach einem der vorherigen Ansprüche, umfassend eine Füllstandsprüfung des Behälters (20), wobei die Füllstandsprüfung ein Abgleichen zwischen dem Beladungszustand des Behälters (20) und der bestimmten Beladung umfasst.

8. Verfahren nach Anspruch 7, umfassend ein, insbesondere automatisches, Wechseln des Behälters (20) basierend auf der Füllstandsprüfung.

9. Verfahren nach einem der vorherigen Ansprüche, umfassend ein Zwischenspeichern und/oder ein Rezirkulieren eines zu empfangenden Objekts (30), wobei das Zwischenspeichern und/oder das Rezirkulieren basierend auf der bestimmten Beladung erfolgt.

10. Verfahren nach einem der vorherigen Ansprüche, umfassend ein Verarbeiten historischer Daten, insbesondere der erhaltenen Informationen und/oder von Ankunftszeitpunkten oder Paketvolumen, wobei das Bestimmen der Beladung unter Berücksichtigung der historischen Daten erfolgt, insbesondere indem das Bestimmen der Beladung eine lokale Vorhersage, insbesondere eines Sortieraufkommens, umfasst.

11. Verfahren nach einem der vorherigen Ansprüche, bei dem das Bestimmen der Beladung in zumindest einem lokalen System erfolgt, umfassend ein Aggregieren der bestimmten Beladung, insbesondere einer lokalen Vorhersage, des lokalen Systems durch ein zentrales System und ein Erstellen einer übergeordneten Nachfrageprognose durch das zentrale System, insbesondere umfassend ein Berücksichtigen komplexer Muster wie saisonale Schwankungen, Spitzenzeiten und/oder regionale Unterschiede, beispielsweise durch Nutzen maschinellen Lernens.

12. Verfahren nach Anspruch 11, wobei das Erstellen der übergeordneten Nachfrageprognose eine Analyse langfristiger Muster und/oder komplexer räumlicher und zeitlicher Beziehungen umfasst, insbesondere durch das Nutzen maschinellen Lernens mit Long short-term memory (LSTM) und/oder einem Convolutional Neural Network (CNN).

13. Verfahren nach einem der vorherigen Ansprüche, bei dem das Empfangen und/oder das Beladen mittels einer Packstation (10), insbesondere mittels eines Roboters, erfolgt, die zumindest einen Endeffektor zum Empfangen und/oder Beladen eines Objekts (30) aufweist.

14. Verfahren nach Anspruch 13, wobei die Packstation (10) mehr als einen Endeffektor zum Empfangen und/oder Beladen eines Objekts (30) aufweist, umfassend ein Auswählen eines Endeffektors, wobei das Auswählen basierend auf den erhaltenen Informationen zu den zu empfangenen Objekten (30), den erhaltenen Informationen zu dem Beladungszustand des Behälters (20) und/oder auf der bestimmten Beladung erfolgt.

15. Verfahren nach Anspruch 14 in Verbindung mit Anspruch 11 bei dem das Auswählen des Endeffektors basierend auf der übergeordneten Nachfrageprognose des zentralen Systems erfolgt.

16. Verfahren nach einem der Ansprüche 13 bis 15, wobei zumindest ein Endeffektor eine Vielzahl verfahrbarer Einheiten (13) aufweist, wobei das Beladen des Behälters (20) ein Positionieren zumindest einer der verfahrbaren Einheiten (13), ein Befördern des empfangenen Objekts (30) mittels der zumindest einen verfahrbaren Einheit (13) an eine Entladeposition (50) und ein Entladen des empfangenen Objekts (30) in den Behälter (20) umfasst.

17. Vorrichtung (110) zum Beladen eines Behälters (20) mit einem Objekt (30), insbesondere zum Durchführen eines Verfahrens nach einem der Ansprüche 1 bis 16, umfassend eine Kommunikationseinheit (41), die ausgebildet und eingerichtet ist, Informationen zu mehreren, insbesondere in einem definierten Zeitintervall, von der Vorrichtung (110) zu empfangenden Objekten (30) und Informationen zu einem Beladungszustand des Behälters (20) zu erhalten, eine Steuereinheit (40), die mit der Kommunikationseinheit (41) signalverbunden ist und ausgebildet und eingerichtet ist, basierend auf den erhaltenen Informationen eine Beladung des Behälters (20) mit den zu empfangenden Objekten (30), insbesondere einen Zielbereich in dem Behälter (20), eine Reihenfolge der zu empfangenden Objekte (30) und/oder eine Orientierung der zu empfangenden Objekte (30), zu bestimmen, und eine Packstation (10), aufweisend zumindest einen Endeffektor zum Beladen eines Objekts (30), wobei die Steuereinheit (40) ausgebildet und eingerichtet ist, basierend auf der bestimmten Beladung den Endeffektor zum Beladen des Behälters (20) mit dem empfangenen Objekt (30) anzusteuern.

18. Vorrichtung (110) nach Anspruch 17, wobei die Packstation (10) mehr als einen Endeffektor aufweist, insbesondere zumindest ein Lastaufnahmemittel und/oder zumindest ein Greifelement aufweist, wobei die Steuereinheit (40) ausgebildet und eingerichtet ist, basierend auf der bestimmten Beladung einen Endeffektor zum Beladen auszuwählen und anzusteuern.

19. Vorrichtung (110) nach Anspruch 17 oder 18, aufweisend einen Zwischenspeicher (62), insbesondere eine Pufferstelle, ein Zwischenlager und/oder ein Fördersystem, wobei die Steuereinheit (40) ausgebildet und eingerichtet ist, zumindest eines der zu empfangenden Objekte (30) in dem Zwischenspeicher (62) zwischenzulagern und/oder zu rezirkulieren.

20. Sortierzentrum (100), insbesondere zur Paketsortierung, umfassend eine Vorrichtung (110) nach einem der Ansprüche 17 bis 19, insbesondere zum Durchführen eines Verfahrens nach einem der Ansprüche 1 bis 16, eine Sortieranlage (120), insbesondere einen Quergutsorter (121), und einen Behälter (20), insbesondere einen Rollbehälter, wobei die Kommunikationseinheit (41) der Vorrichtung (110) ausgebildet und eingerichtet ist, die Informationen zu mehreren, insbesondere in einem definierten Zeitintervall, von der Vorrichtung (110) zu empfangenden Objekten (30) von der Sortieranlage (120) zu erhalten und den Behälter (20) basierend auf der bestimmten Beladung mit zumindest einem der zu empfangenden Objekte (30) zu beladen.

21. Computerprogrammprodukt, insbesondere ein Steuerprogramm für eine Steuereinheit (40), umfassend Befehle, die bewirken, dass eine Vorrichtung (110) nach einem der Ansprüche 17 bis 19 und/oder ein Sortierzentrum (100) nach Anspruch 20 die Verfahrensschritte nach einem der Ansprüche 1 bis 16 ausführt.

## Geänderte Patentansprüche

### Geänderte Patentansprüche gemäss Regel 137(2) EPÜ.

1. Verfahren zum Beladen eines Behälters (20) mit einem Objekt (30), umfassend die Schritte:
- Erhalten von Informationen, insbesondere von einer Sortieranlage (120), zu mehreren, insbesondere in einem definierten Zeitintervall, zu empfangenden Objekten (30);
- Erhalten von Informationen zu einem Beladungszustand des Behälters (20);
- Basierend auf den erhaltenen Informationen, Bestimmen einer Beladung des Behälters (20) mit den zu empfangenden Objekten (30), insbesondere Bestimmen eines Zielbereichs in dem Behälter (20), einer Reihenfolge der zu empfangenden Objekte (30) und/oder einer Orientierung der zu empfangenden Objekte (30); und
- Basierend auf der bestimmten Beladung, insbesondere basierend auf einem bestimmten Zielbereich in dem Behälter (20), Beladen des Behälters (20) mit zumindest einem der zu empfangenden Objekte (30),
wobei das Erhalten von Informationen zu dem Beladungszustand mittels einer Erfassungseinheit erfolgt, die zumindest eine Kamera oder einen anderen optischen Sensor, einen Druck- oder Kraftsensor, einen kapazitiven Sensor, einen piezoelektrischen Sensor, einen akustischen Sensor und/oder einen Magnetfeldsensor aufweist.

2. Verfahren nach Anspruch 1, bei dem das Erhalten von Informationen zu den zu empfangenen Objekten (30) und/oder zu dem Beladungszustand im Wesentlichen kontinuierlich erfolgt und das Bestimmen, basierend auf den im Wesentlichen kontinuierlich erhaltenen Informationen, dynamisch aktualisiert wird.

3. Verfahren nach Anspruch 1 oder 2, bei dem die Informationen zu den zu empfangenden Objekten (30) eine Form, ein Gewicht und/oder einen Typ der zu empfangenden Objekte (30) umfasst.

4. Verfahren nach einem der vorherigen Ansprüche, bei dem das Erhalten von Informationen zu den zu empfangenden Objekten (30) mittels einer Erfassungseinheit erfolgt, die zumindest eine Kamera oder einen anderen optischen Sensor, einen Druck- oder Kraftsensor, einen kapazitiven Sensor, einen piezoelektrischen Sensor, einen akustischen Sensor und/oder einen Magnetfeldsensor aufweist.

5. Verfahren nach einem der vorherigen Ansprüche, bei dem basierend auf dem Erhalten von Informationen zu den zu empfangenen Objekten (30) ein Kategorisieren zumindest eines der zu empfangenen Objekte (30) erfolgt und wobei das Bestimmen der Beladung des Behälters (20), insbesondere des Zielbereichs in dem Behälter (20) für das zumindest eine zu empfangende Objekt (30), und/oder das Beladen des Behälters (20) mit dem zumindest einen zu empfangenden Objekt (30) basierend auf dem Kategorisieren des zumindest einen zu empfangenden Objekts (30) erfolgt.

6. Verfahren nach einem der vorherigen Ansprüche, bei dem basierend auf der bestimmten Beladung, insbesondere basierend auf einer bestimmten Reihenfolge der zu empfangenden Objekte (30), ein Auswählen von zumindest einem der zu empfangenden Objekte (30) erfolgt.

7. Verfahren nach einem der vorherigen Ansprüche, umfassend eine Füllstandsprüfung des Behälters (20), wobei die Füllstandsprüfung ein Abgleichen zwischen dem Beladungszustand des Behälters (20) und der bestimmten Beladung umfasst.

8. Verfahren nach Anspruch 7, umfassend ein, insbesondere automatisches, Wechseln des Behälters (20) basierend auf der Füllstandsprüfung.

9. Verfahren nach einem der vorherigen Ansprüche, umfassend ein Zwischenspeichern und/oder ein Rezirkulieren eines zu empfangenden Objekts (30), wobei das Zwischenspeichern und/oder das Rezirkulieren basierend auf der bestimmten Beladung erfolgt.

10. Verfahren nach einem der vorherigen Ansprüche, umfassend ein Verarbeiten historischer Daten, insbesondere der erhaltenen Informationen und/oder von Ankunftszeitpunkten oder Paketvolumen, wobei das Bestimmen der Beladung unter Berücksichtigung der historischen Daten erfolgt, insbesondere indem das Bestimmen der Beladung eine lokale Vorhersage, insbesondere eines Sortieraufkommens, umfasst.

11. Verfahren nach einem der vorherigen Ansprüche, bei dem das Bestimmen der Beladung in zumindest einem lokalen System erfolgt, umfassend ein Aggregieren der bestimmten Beladung, insbesondere einer lokalen Vorhersage, des lokalen Systems durch ein zentrales System und ein Erstellen einer übergeordneten Nachfrageprognose durch das zentrale System, insbesondere umfassend ein Berücksichtigen komplexer Muster wie saisonale Schwankungen, Spitzenzeiten und/oder regionale Unterschiede, beispielsweise durch Nutzen maschinellen Lernens.

12. Verfahren nach Anspruch 11, wobei das Erstellen der übergeordneten Nachfrageprognose eine Analyse langfristiger Muster und/oder komplexer räumlicher und zeitlicher Beziehungen umfasst, insbesondere durch das Nutzen maschinellen Lernens mit Long short-term memory (LSTM) und/oder einem Convolutional Neural Network (CNN).

13. Verfahren nach einem der vorherigen Ansprüche, bei dem das Empfangen und/oder das Beladen mittels einer Packstation (10), insbesondere mittels eines Roboters, erfolgt, die zumindest einen Endeffektor zum Empfangen und/oder Beladen eines Objekts (30) aufweist.

14. Verfahren nach Anspruch 13, wobei die Packstation (10) mehr als einen Endeffektor zum Empfangen und/oder Beladen eines Objekts (30) aufweist, umfassend ein Auswählen eines Endeffektors, wobei das Auswählen basierend auf den erhaltenen Informationen zu den zu empfangenen Objekten (30), den erhaltenen Informationen zu dem Beladungszustand des Behälters (20) und/oder auf der bestimmten Beladung erfolgt.

15. Verfahren nach Anspruch 14 in Verbindung mit Anspruch 11 bei dem das Auswählen des Endeffektors basierend auf der übergeordneten Nachfrageprognose des zentralen Systems erfolgt.

16. Verfahren nach einem der Ansprüche 13 bis 15, wobei zumindest ein Endeffektor eine Vielzahl verfahrbarer Einheiten (13) aufweist, wobei das Beladen des Behälters (20) ein Positionieren zumindest einer der verfahrbaren Einheiten (13), ein Befördern des empfangenen Objekts (30) mittels der zumindest einen verfahrbaren Einheit (13) an eine Entladeposition (50) und ein Entladen des empfangenen Objekts (30) in den Behälter (20) umfasst.

17. Vorrichtung (110) zum Beladen eines Behälters (20) mit einem Objekt (30), insbesondere zum Durchführen eines Verfahrens nach einem der Ansprüche 1 bis 16, umfassend eine Kommunikationseinheit (41), die ausgebildet und eingerichtet ist, Informationen zu mehreren, insbesondere in einem definierten Zeitintervall, von der Vorrichtung (110) zu empfangenden Objekten (30) und Informationen zu einem Beladungszustand des Behälters (20) zu erhalten, eine Steuereinheit (40), die mit der Kommunikationseinheit (41) signalverbunden ist und ausgebildet und eingerichtet ist, basierend auf den erhaltenen Informationen eine Beladung des Behälters (20) mit den zu empfangenden Objekten (30), insbesondere einen Zielbereich in dem Behälter (20), eine Reihenfolge der zu empfangenden Objekte (30) und/oder eine Orientierung der zu empfangenden Objekte (30), zu bestimmen, und eine Packstation (10), aufweisend zumindest einen Endeffektor zum Beladen eines Objekts (30), wobei die Steuereinheit (40) ausgebildet und eingerichtet ist, basierend auf der bestimmten Beladung den Endeffektor zum Beladen des Behälters (20) mit dem empfangenen Objekt (30) anzusteuern, und wobei die Vorrichtung (110) eine Erfassungseinheit zum Erhalten von Informationen zu dem Beladungszustand umfasst, die zumindest eine Kamera oder einen anderen optischen Sensor, einen Druck- oder Kraftsensor, einen kapazitiven Sensor, einen piezoelektrischen Sensor, einen akustischen Sensor und/oder einen Magnetfeldsensor aufweist.

18. Vorrichtung (110) nach Anspruch 17, wobei die Packstation (10) mehr als einen Endeffektor aufweist, insbesondere zumindest ein Lastaufnahmemittel und/oder zumindest ein Greifelement aufweist, wobei die Steuereinheit (40) ausgebildet und eingerichtet ist, basierend auf der bestimmten Beladung einen Endeffektor zum Beladen auszuwählen und anzusteuern.

19. Vorrichtung (110) nach Anspruch 17 oder 18, aufweisend einen Zwischenspeicher (62), insbesondere eine Pufferstelle, ein Zwischenlager und/oder ein Fördersystem, wobei die Steuereinheit (40) ausgebildet und eingerichtet ist, zumindest eines der zu empfangenden Objekte (30) in dem Zwischenspeicher (62) zwischenzulagern und/oder zu rezirkulieren.

20. Sortierzentrum (100), insbesondere zur Paketsortierung, umfassend eine Vorrichtung (110) nach einem der Ansprüche 17 bis 19, insbesondere zum Durchführen eines Verfahrens nach einem der Ansprüche 1 bis 16, eine Sortieranlage (120), insbesondere einen Quergutsorter (121), und einen Behälter (20), insbesondere einen Rollbehälter, wobei die Kommunikationseinheit (41) der Vorrichtung (110) ausgebildet und eingerichtet ist, die Informationen zu mehreren, insbesondere in einem definierten Zeitintervall, von der Vorrichtung (110) zu empfangenden Objekten (30) von der Sortieranlage (120) zu erhalten und den Behälter (20) basierend auf der bestimmten Beladung mit zumindest einem der zu empfangenden Objekte (30) zu beladen.

21. Computerprogrammprodukt, insbesondere ein Steuerprogramm für eine Steuereinheit (40), umfassend Befehle, die bewirken, dass eine Vorrichtung (110) nach einem der Ansprüche 17 bis 19 und/oder ein Sortierzentrum (100) nach Anspruch 20 die Verfahrensschritte nach einem der Ansprüche 1 bis 16 ausführt.
